(19) Europäisches Patentamt
European Patent Office
Office européen des brevets

(11) EP 2 053 439 B1

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **08018631.5**

(22) Anmeldetag: **24.10.2008**

(51) Internationale Patentklassifikation (IPC):
***G02B 15/24*** (2006.01) ***G02B 9/34*** (2006.01)
***G02B 13/24*** (2006.01)

(52) Gemeinsame Patentklassifikation (CPC):
**G02B 13/24; G02B 9/34; G02B 15/24**

(54) **MAKRO-OBJEKTIV**

MACRO LENS

OBJECTIF MACRO

(84) Benannte Vertragsstaaten:
**DE ES FR GB IT**

(30) Priorität: **26.10.2007 DE 102007051620**

(43) Veröffentlichungstag der Anmeldung:
**29.04.2009 Patentblatt 2009/18**

(73) Patentinhaber: **Qioptiq Photonics GmbH & Co. KG**
**37081 Göttingen (DE)**

(72) Erfinder: **Hackemer, Witold**
**55595 Bockenau (DE)**

(74) Vertreter: **Bosch Jehle Patentanwaltsgesellschaft mbH**
**Flüggenstraße 13**
**80639 München (DE)**

(56) Entgegenhaltungen:
**JP-A- 4 040 405** **US-A- 5 644 433**
**US-A1- 2006 164 540**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Gebiet der Erfindung

Die Erfindung betrifft ein Makro- oder Reproduktionsobjektiv mit sehr großem Abbildungsmaßstabsbereich von β' = -0,5 bis β' = -2. Industrielle Anwendung finden derartige Objektive z.B. bei der Inspektion von LCD-Displays im Verlauf der verschiedenen Produktionsabschnitte. Dabei ist es wichtig, Defekte zu erkennen und deren tatsächliche Größe zu ermitteln. Insofern ist eine hinreichende Korrektion der Verzeichnung vorteilhaft.

Stand der Technik

Im Stand der Technik werden u.a. Zoom-Objektive beschrieben: In JP 04-040405 A wird ein klassisches Zoom-Objektiv beschrieben, das zwecks Veränderung der Objektivbrennweite aber auch zum Fokussieren aus dem Unendlichen auf näher liegende Objekte eine Verlagerung der Elemente endlicher Brechkraft (Linsen) verwendet und damit eine weitere Veränderung der Brennweite des Gesamtsystems verursacht. In US 2006/164540 A1 wird ein Zoom-Objektiv für Mobiltelefone mit Elementen variabler Brechkraft (Flüssiglinse) angeführt, dessen Elemente der Veränderung der Brennweite und der Fokussierung aus dem Unendlichen auf näher liegende Objekte dienen, wobei ebenfalls die Brennweite des Objektivs eine Veränderung erleidet.

Von derartigen Zoom-Objektiven unterscheiden sich Makro-Objektive ähnlicher Brennweite sowohl in der optischen Konstruktion als auch in den Abbildungseigenschaften, wie nachfolgend dargelegt.

Es sind eine ganze Reihe von Makro-Objektiven mit großem Abbildungsmaßstabsbereich (β'-Bereich) bekannt. Zu ihnen gehören beispielsweise solche Objektive, wie:

- Process-Lenses (Celor/Syntor-Typ; 4-linsig) mit einer Anfangsöffnung k = 16 und einer Arbeitsöffnung 22 - 64. Eine verbesserte Variante hierzu ist ein 8-linsiger Typ mit k = 8,0 und einer Arbeitsöffnung von k = 16 (Zeiss-Germinare, DD 207 268 B1), und
- Objektive vom Orthometar-Typ und deren Abkömmlinge mit weniger strengen Verzeichnungs- und Farbkorrektion, die durch eine kleinere Blendenzahl (z.B. k = 5,6 bis 8) universeller einsetzbar sind (siehe z.B. US 3,941,457).

Diese Systemtypen zeigen verglichen mit klassischen Photoobjektivtpyen: einen weniger ausgeprägten Pupillenaberrationsgang und brachten somit in einer symmetrischen (1:1) Ausführung die Voraussetzung für bessere Abbildungsleistung bei reprographischen Aufgaben mit einem variablen Abbildungsmaßstab mit.

Bei der Korrektion solcher Objektive ist der ganze technische Aufwand der Unterdrückung der Sphärochromasie der Hauptstrahlen gewidmet.

Die in der Theorie der Abbildung bekannten, nach Abbildungsmaßstabs-Wechsel (Umfokussieren) entstandenen unkorrigierbaren Komafehler (meridionale Koma, Rinnenfehler) führten sehr schnell zu einem Verlust der Abbildungsqualität.

Da der für die Asymmetrie der Kaustik verantwortliche Komaterm mit der zweiten Potenz der Systemapertur zusammenhängt, konnte durch ein starkes Abblenden (oft an die Beugungsgrenze) eine leidliche Abbildungsleistung für die in dem o.g. Reproprozess typischen niedrigen Ortsfrequenzen von wenigen Linienpaaren pro mm erreicht werden.

Im Wesentlichen kann ein Reproduktionsobjektiv also nur für einen Abbildungsmaßstab $\beta_0$'optimal korrigiert werden. Die Aspekte der Umfokussierung und ihr Einfluss auf die Aberrationen werden u.a. in folgender Literatur behandelt:

(1) Marechal, A.: Optique geometrique generale In Handbuch der Physik (hrsg. von S. Flügge) Bd. XXIV, Grundlagen der Optik, Springer Verlag, Berlin 1956

(2) Dietzsch, E.: Zur Tiefenabbildung der Pupille Feingerätetechnik 26 (1977) 1, S. 3-5

(3) Slyusarev, G.G.: Aberration and Optical Design Theory, Adam Hilger Ltd., Bristol 1984

(4) Wynne, C.G.: Proc. Phys. Soc. 65B 429-437 (1952)

Wenn ein solches Objektiv zwecks Einstellung auf einen anderen β'-Wert axial verstellt werden muss (Gesamtfokussierung) entstehen dabei Abbildungsfehler, die in Abhängigkeit von ihrer Art und Größe den Abbildungsprozess stören oder gar unmöglich machen. Nach der Theorie der Aberrationen zeigt im allgemeinen ein für einen Abbildungs-

maßstab $\beta'_0$ korrigiertes Objektiv, das um ein neues $\beta'$ zu erreichen, wo $|\beta'| > |\beta'_0|$ ist, also näher an das Objekt verschoben (umfokussiert) werden muss, u.a. folgende Abbildungsfehler (= Umfokussierungsaberrationen):

(a) - sphärische Unterkorrektion
(b) - Aussenkoma
(c) - Astigmatismus (Überkorrektion, bei korrigierter Verzeichnung und wenn der Pupillenabbildungsmaßstab $\beta_p$ > 1 ist)
(d) - Verzeichnung und Farbvergrößerungsfehler (in dem typischen Fall unkorrigierter Pupillenabbildung)

Für Objektive mittlerer Blendenzahl (z.B. k = 5,6), die bezüglich der Aperturblende im System einen symmetrischen Linsenaufbau zeigen (Pupillen in Knotenpunkten,Pupillenabbildungsmaßstab $\beta'_p$ = 1), verlieren die Punkte a und c an Bedeutung.

Wird im Systemkorrektionsprozeß dem Problem der Sphärochromasie der Pupillenabbildung ausreichen Aufmerksamkeit und Mittel gewidmet, können die Verzeichnung und der Farbquerfehler weitestgehend Abbildungsmaßstab invariant gestaltet werden.

Eine besondere Stellung in der Hierarchie optischer Abbildungsfehler hat die Koma, die im Seidelschen Gebiet mit dem Quadrat der Systemöffnung und linear mit der Feldkoordinate zusammenhängt.

Nach Marechal und Dietzsch kann die Formel für den analytischen Komakoeffizienten als Funktion der Objektentfernung in folgender Form geschrieben werden, wobei die auftretenden Größen pupillenbezogen sind.

$$C = C_o - \left[ 2 \cdot (A_o + W_o) - \frac{n}{2h\omega} \left( \frac{h'\omega'}{p'} - \frac{h\omega}{p} \right) \right] \cdot \left( \frac{1}{p} - \frac{1}{p_o} \right)$$

Dabei bedeuten:

| | |
|---|---|
| C | Komakoeffizient |
| $C_o$ | Komakoeffizient in der Ausgangstellung (Korrektionskonfiguration) |
| $A_o$ | Astigmatismus (Zweischalenfehler)in der Ausgangsstellung |
| $W_o$ | mittlere Bildfeldwölbung in der Ausgangsstellung Ungestrichene Größen sind objektraumbezogene Größen, gestrichene Größen sind bildraumbezogen. |
| n,n' | Brechzahl |
| h, h' | Pupillenhöhe |
| $\omega$, $\omega'$ | Feldwinkel |
| $p_o$ | Abstand der Objektebene von der Eintrittspupille EP in der Korrektionsfonfiguration |
| $p = s-s_P$ | Abstand der Objektebene von der Eintrittspupille EP nach Umfokussieren |
| $p' = s'-s_{P'}$ | Abstand der Bildebene von der Austrittspupille AP nach Umfokussieren |
| s, $s_p$ | Objekt- und EP-Schnittweite, beide auf den in Lichtrichtung (LiRi) ersten Systemscheitel bezogen |
| s', $s'_p$ | Bild- und AP-Schnittweite, beide auf den letzten (in Li-Ri) Systemscheitel bezogen. |

Unter der Annahme, dass das Objektiv für eine Objektlage (Korrektionskonfiguration) korrigiert ist, d.h. $C_o$, $A_o$ und $W_o$ seien Null, liefert die Formeldiskussion die Informationen über die notwendige Voraussetzung, für welche nach erfolgter Objektverschiebung der Komakoeffizient C zu Null wird, also die Aussichten auf die Komakorrektion bestehen könnten.

Dies wäre also dann der Fall, wenn $\frac{h'\omega'}{p'} = \frac{h\omega}{p}$ ist.

Aus der Helmholtz-Lagrangeschen Invariante

$$\beta' = \frac{n \cdot u}{n' \cdot u'}$$

*und*

$$\beta'_p = \frac{n \cdot \omega}{n' \cdot \omega'}$$

folgt hieraus:

$$\beta' = \left(\frac{n}{n'}\right)^2 \cdot \frac{1}{\beta'_P} \quad .$$

Für den in der Reproduktion typischen Fall n' = n bedeutet dies, dass die Objekt- und Pupillenvergrößerung invers sein müssen, d.h. bei einer Objekt- und Bildverlagerung (Umfokussierung) der Abbildungsmaßstab unverändert bleibt.
Damit erklärt sich die Notwendigkeit für eine Änderung der Systemstruktur, wenn man für unterschiedliche β'-Werte kontinuierlich die Korrektion der Koma erhalten will.
Eine besonders effiziente technische Umsetzung der o.g. Systemstrukturänderung (Bildfehlerausgleich) ist Gegenstand dieser Erfindung.

Aufgabe

Aufgabe der Erfindung ist es, ein Makro-Objektiv anzugeben, welches über einen breiten Bereich von Abbildungsmaßstäben eine hohe Abbildungsgüte erreicht.

Lösung

Dies Aufgabe wird durch die Erfindung mit den Merkmalen des unabhängigen Anspruchs gelöst. Vorteilhafte Weiterbildungen der Erfindung sind in den Unteransprüchen gekennzeichnet.
Es wird ein Makro-Objektiv vorgeschlagen, welches eine Aperturblende, die stationär angeordnet ist, aufweist, und welches, in der angegebenen Reihenfolge, von einer Objektebene aus betrachtet, folgende Elemente aufweist:

eine erste positive optische Baugruppe;

eine zweite optische Baugruppe;

eine dritte nahezu afokale optische Baugruppe;

eine vierte positive optische Baugruppe,

wobei die Gesamt-Baulänge des Makro-Objektivs beim Verschieben der zweiten optischen Baugruppe und der dritten nahezu afokalen optischen Baugruppe unverändert bleibt, dadurch gekennzeichnet, dass die zweite optische Baugruppe nahezu afokal ist.

Das erfindungsgemäße Makro-Objektiv weist des Weiteren mechanische Mittel zum gemeinsamen Verschieben der zweiten und dritten optischen Baugruppe innerhalb des Makro-Objektivs entlang der optischen Achse auf, wodurch bei jeder Verschiebung der Abstand zwischen diesen beiden Baugruppen konstant bleibt, und wobei die Aperturblende in gleichem Abstand zum ersten Linsenscheitel der ersten Baugruppe und zum letzten Linsenscheitel der letzten Baugruppe angeordnet ist.
Bei β' = -1 ist das System holosymmetrisch, d.h. der Abstand des letzten Linsenscheitels der zweiten (nahezu afokalen) Baugruppe zur Blendenebene ist gleich dem Abstand des ersten Linsenscheitels der dritten Baugruppe zur Blendenebene.
Das Verschieben der beiden mittleren Baugruppen zusätzlich zur Gesamtfokussierung bewirkt eine kontinuierliche Korrektur der Abberation (Cotinuous Aberration Suppression; CAS), wodurch die Abbildungseigenschaften bei allen Abbildungsmaßstäben nahezu perfekt sind. Zu jedem Abbildungsmaßstab β' gibt es eine optimale Stellung der beiden mittleren optischen Baugruppen, bei der die Abbildungsfehler minimiert sind.
Die Gesamt-Baulänge des Makro-Objektivs bleibt beim gemeinsamen Verschieben der zweiten und dritten afokalen optischen Baugruppe also unverändert.
Eine zusätzlich vorteilhafte Eigenschaft ist, dass die Brennweite des Makro-Objektivs sich beim gemeinsamen

Verschieben der zweiten und dritten nahezu afokalen optischen Baugruppe um maximal $10^{-5}$ multipliziert mit der Brennweite des Makro-Objektivs bei symmetrischer Stellung der zweiten und dritten optischen Baugruppe innerhalb des Makro-Objektivs ändert. Das heißt, dass die relative Brennweitenvariation des vorgeschlagenen Makro-Objektivs bezogen auf die Brennweite f' bei β'= -1 im ganzen Abbildungsmaßstabsbereich folgenden Wert nicht überschreitet:

$$\frac{\Delta f'_{max}}{f'_{\beta'=-1}} = \frac{f'_{max} - f'_{min}}{f'_{\beta'=-1}} < 1 \cdot 10^{-5}$$

Dabei sind $f'_{max}$ und $f'_{min}$ entsprechend die längste und die kürzeste Systembrennweite aus dem Abbildungsmaßstabsbereich von ß' = -0,5 bis ß' = -2.

Das ermöglicht es dem Anwender die Objektivlageveränderung in Relation zur Objekt- und Abbildungsebene für definierte Werte lateraler Abbildungsmaßstäbe mit den bekannten Regeln der Gaußoptik exakt zu berechnen.

In einer vorteilhaften Ausführung weist das erfindungsgemäße Makro-Objektiv in der angegebenen Reihenfolge, von der Objektebene aus betrachtet, folgende Elemente auf:

a) die erste positive optische Baugruppe mit

  al) einer ersten positiven Linse, und
  a2) einer zweiten negativen Linse;

b) die zweite nahezu afokale optische Baugruppe mit

  bl) einer dritten positiven Linse, und
  b2) einer vierten negativen Linse;

c) die Aperturblende;
d) die dritte nahezu afokale optische Baugruppe;
e) die vierte positive optische Baugruppe.

Die dritte optische Baugruppe und die vierte positive optische Baugruppe sind dabei spiegelsymmetrisch zu den optischen Baugruppen vor der Blende aufgebaut.

In einer weiteren vorteilhaften Ausführung weist das erfindungsgemäße Makro-Objektiv in der angegebenen Reihenfolge, von der Objektebene aus betrachtet, folgende Elemente auf:

a) die erste positive optische Baugruppe mit

  al) einer ersten positiven Meniskus-Linse, und
  a2) einer zweiten negativen Meniskus-Linse;

b) die zweite nahezu afokale optische Baugruppe mit

  bl) einer dritten positiven Bikonvex-Linse, und
  b2) einer vierten negativen Bikonkav-Linse;

c) die Aperturblende;
d) die dritte nahezu afokale optische Baugruppe;
e) die vierte positive optische Baugruppe;

wobei die dritte optische Baugruppe und die vierte positive optische Baugruppe spiegelsymmetrisch zu den optischen Baugruppen vor der Blende aufgebaut sind.

Eine weitere vorteilhafte Ausführung des erfindungsgemäßen Makro-Objektivs ist dadurch gekennzeichnet, dass es in der angegebenen Reihenfolge, von der Objektebene aus betrachtet, folgende Elemente aufweist:

a) die erste positive optische Baugruppe mit

  al) einer ersten positiven Meniskus-Linse,

wobei deren konvexe Oberfläche in Richtung der Objektebene und die konkave Oberfläche in Richtung der Bildebene weisen, und
a2) einer zweiten negativen Meniskus-Linse;
wobei deren konvexe Oberfläche in Richtung der Objektebene und die konkave Oberfläche in Richtung der Bildebene weisen;

b) die zweite nahezu afokale optische Baugruppe mit

bl) einer dritten positiven Bikonvex-Linse,
wobei deren stärker gekrümmte erste konvexe Oberfläche in Richtung der Objektebene und die zweite geringer gekrümmte konvexe Oberfläche in Richtung der Bildebene weist, und
b2) einer vierten negativen Bikonkav-Linse,
wobei deren geringer gekrümmte erste konkave Oberfläche in Richtung der Objektebene und die zweite stärker gekrümmte konkave Oberfläche in Richtung der Bildebene weisen;

c) die Aperturblende;
d) die dritte nahezu afokale optische Baugruppe;
e) die vierte positive optische Baugruppe.

Dabei sind die dritte optische Baugruppe und die vierte positive optische Baugruppe spiegelsymmetrisch zu den optischen Baugruppen vor der Blende aufgebaut.
In einer vorteilhaften Ausführung ist das vorgeschlagene Makro-Objektiv so gestaltet, dass die Radien, Dicken, Medienbrechzahlen n und Abbeschen Zahlen v der Linsen gemäß Fig. 2 die folgenden Wertebereiche aufweisen (Tabelle 1).

Tabelle 1

| Bezugszeichen | Radius R [in Einheiten der Systembrennweite $f'_e$] | Dicke d [in Einheiten der Systembrennweite $f'_e$ | Medienbrechzahl $n_d$ | Abbesche Zahl $v_d$ |
|---|---|---|---|---|
| R1 | 0,36 < R1 < 0,44 | | | |
| d1 | | 0,030 < d1 <0,040 | 1,88299 7 | 40,76 |
| R2 | 0,93 < R2 < 1,14 | | | |
| R3 | 0,36 < R3 < 0,44 | | | |
| d3 | | 0,034 < d3 < 0,042 | 1,61336 0 | 44,49 |
| R4 | 0,19 < R4 < 0,24 | | | |
| R5 | 0,20 < R5 < 0,25 | | | |
| d5 | | 0,038 < d5 < 0,048 | 1,59240 0 | 68,40 |
| R6 | -5,9 < R6 < - 4,8 | | | |
| d6 | | 0,12 < d6 < 0,015 | 1,63775 0 | 42,41 |
| R7 | 0,23 < R7 < 0,29 | | | |
| b, c | | 0,12 < (b+c) < 0,15 | | |

Die Radien R und Abstände d sind hierbei in Einheiten von $f'_e$ ausgedrückt, wobei $f'_e$ die Objektivbrennweite für die Wellenlänge $\lambda$ = 546,074 nm ist. Die Medienbrechzahlen n und Abbeschen Zahlen v sind für die Fraunhofer-Linie d angegeben, also für die Wellenlänge $\lambda$ = 587,5618 nm.
Die bekannten Fraunhofer-Linien g, e und r, sind durch die folgenden Wellenlängen $\lambda$ gekennzeichnet:

| Fraunhofer-Linie | Wellenlänge $\lambda$ [nm] |
|---|---|
| g | 435,8343 |
| e | 546,074 |
| r | 706,5188 |

Die Relationen der Radien und Dicken der Linsen können innerhalb der in Tabelle 1 angegebenen Bereichen zueinander verschoben sein. Das heißt, die Werte für die Radien und Dicken müssen nicht proportional zueinander variiert werden.

Das Makro-Objektiv hat einen Bildkreisdurchmesser $2y'_{max}$ von mindestens $0{,}7 \cdot f'_e$. Es hat eine maximale meridionale Büschelausdehnung $\left|y^+_{APE}\right| + \left|y^-_{APE}\right|$ im Ort der Aperturblende und erreicht während der Abbildung des ebenfalls in der Meridionalebene befindlichen bildseitigen Feldpunktes mit der Koordinate $y' = 0{,}35 \cdot f'_e$ folgende Werte(s. Tabelle 2):

Tabelle 2

| β' | $y^+_{APE}$ | $y^-_{APE}$ | $\left\|y^+_{APE}\right\| + \left\|y^-_{APE}\right\|$ |
|---|---|---|---|
| -0,5 | $0{,}0586 \cdot f'_e$ | $-0{,}0586 \cdot f'_e$ | $0{,}1172 \cdot f'_e$ |
| -0,667 | $0{,}0625 \cdot f'_e$ | $-0{,}0625 \cdot f'_e$ | $0{,}1250 \cdot f'_e$ |
| -1 | $0{,}0680 \cdot f'_e$ | $-0{,}0680 \cdot f'_e$ | $0{,}1360 \cdot f'_e$ |
| -1,5 | $0{,}0715 \cdot f'_e$ | $-0{,}0715 \cdot f'_e$ | $0{,}1430 \cdot f'_e$ |
| -2 | $0{,}0715 \cdot f'e$ | $-0{,}0715 \cdot f'_e$ | $0{,}1430 \cdot f'_e$ |

Die Meridionalebene beinhaltet den Objektpunkt und die optische Achse des Objektivs. Wie man sieht, weist das Makro-Objektiv nur eine sehr geringe Vignettierung auf.

Das vorgeschlagene Makro-Objektiv hat für alle Werte des Abbildungsmaßstabes aus dem Bereich von β' = -0,5 bis -2,0 eine von dem Schwerstrahl der Hauptfarbe e als Durchstoßungskoordinate in der Abbildungsebene definierte Bildhöhe $y'_e$, die ihrerseits folgende Bedingung erfüllt:

$$0 < \left|y'_e\right| \leq 0{,}35 \cdot f'_e.$$

Dabei überschreitet eine für einen Schwerstrahl beliebiger Wellenlänge λ, mit g < λ < r, gebildete Höhendifferenz $|y'_\lambda - y'_e|$ den Wert $4{,}5 \cdot 10^{-6} \cdot f'_e$ nicht, es gilt also stets:

$$\left|y'_\lambda - y'_e\right| \leq 4{,}5 \cdot 10^{-6} \cdot f'_e.$$

Bei einer typischen Brennweite von $f'_e$ von 100 mm ergibt das einen Farbquerfehler von weniger als 0,45 µm!

Außerdem hat das beschriebene Makro-Objektiv für alle Abbildungsmaßstabswerte aus dem Bereich von -0,5 bis -2,0 die folgende vorteilhafte Eigenschaft: Man betrachte einen Schwerstrahl der Hauptfarbe e. Für diesen bezeichnet $y'_e$ die Durchstoßungskoordinate in der Abbildungsebene, also die Bildhöhe $y'_e$.

Für Bildhöhen, welche im Bereich

$$0 < \left|y'_e\right| \leq 0{,}35 \cdot f'_e.$$

liegen, weichen diese nur um weniger als 1 Promille von der durch die Gesetze der Gaußschen Optik vorgegebenen idealen Bildhöhe $y'_{e,Parax}$ ab. Es gilt also die Beziehung:

$$\frac{y'_e - y'_{e,Parax}}{y'_{e,Parax}} \leq 0{,}001.$$

Das Makro-Objektiv hat also im gesamten Abbildungsmaßstabsbereich eine hervorragende Orthoskopie.

Der Farbortsfehler des erfindungsgemäßen Makro-Objektivs liegt für die Strahlen aller Pupillenzonen und aller Wellenlängen aus dem spektralen Bereich g < λ < r innerhalb einer wellenoptischen Abbildungstiefe von

$$b'_{0.8} = \pm 2 \cdot \lambda \cdot k_{eff}.$$

Dabei ist $k_{eff}$ die effektive Blendenzahl, die mit der Blendenzahl $k_\infty$ für den Fall der Abbildung aus dem Unendlichen folgendermaßen zusammenhängt:

$$k_{eff} = k_\infty \left(1 - \frac{\beta'}{\beta'_p}\right).$$

Hierbei ist $\beta'_p$ der Pupillen-Abbildungsmaßstab

$$\beta'_p = \frac{D_{AP}}{D_{EP}}$$

$D_{AP}$ = Durchmesser Austrittspupille
$D_{EP}$ = Durchmesser Eintrittspupille

Zusammenfassend ergeben sich für das erfindungsgemäße Makro-Objektiv die folgenden Vorteile:

- ein sehr großer Abbildungsmaßstabsbereich von $\beta'$ = -0,5 bis -2;
- eine hohe Öffnung (bzw. kleine Blendenzahl k = 4,0 bis 5,2) bzw. hohe Werte der objektseitigen und der bildseitigen numerischen Apertur (NA und NA'), die insbesondere die Auflösung und die Lage der physikalischen Beugungsgrenze beeinflussen;
- eine maximale Abbildungsleistung schon bei der Anfangsöffnung (offene Aperturblende);
- hohe Werte der relativen Beleuchtungsstärke im Feld;
- eine hochgradige Erhaltung der Orthoskopie (Verzeichnungsfreiheit) beim Vergrößerungswechsel (Verzeichnung < 0,1 %);
- ein Farbvergrößerungsfehler von nahezu Null im breitem Spektrum von g bis r im gesamten Abbildungsmaßstabs-Bereich;
- ein Farbortsfehler innerhalb der wellenoptischen Abbildungstiefe im Spektrum von g bis r.

Weitere Einzelheiten und Merkmale ergeben sich aus der nachfolgenden Beschreibung von bevorzugten Ausführungsbeispielen in Verbindung mit den Unteransprüchen.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

| | |
|---|---|
| Fig. 1 | eine schematische Darstellung des Aufbaus des Makro-Objektivs; |
| Fig. 2 | eine Darstellung des optischen Aufbaus des Makro-Objektivs, angelehnt an die Bezeichnungen der Fig. 1; |
| Fig. 3 | eine Darstellung des Systems wie im Optik-Design üblich, angelehnt an die Bezeichnungen der Fig. 1; |
| Fig. 4 | das Makro-Objektiv in fünf Konfigurationen für die Abbildungsmaßstäbe $\beta'$ = -2,0, -1,5, -1,0 -0,667 und -0,5; |
| Fig. 4A | das Makro-Objektiv in einer Konfiguration für den Abbildungsmaßstab $\beta'$ = -2,0; |
| Fig. 4B | das Makro-Objektiv in einer Konfiguration für den Abbildungsmaßstab $\beta'$ = -1,5; |
| Fig. 4C | das Makro-Objektiv in einer Konfiguration für den Abbildungsmaßstab $\beta'$ = -1,0; |
| Fig. 4D | das Makro-Objektiv in einer Konfiguration für den Abbildungsmaßstab $\beta'$ = -0,667; |
| Fig. 4E | das Makro-Objektiv in einer Konfiguration für den Abbildungsmaßstab $\beta'$ = -0,5; |
| Fig. 5A | den Graphen der transversalen Strahlaberrationen des Makro-Objektivs als Funktion der Pupillenkoordinaten-bei aktiviertem CAS und einem Abbildungsmaßstab von $\beta'$ = -2,0 für die Bildfeldpunkte y' = 0; 20; 28 und 35 mm; |
| Fig. 5B | den Graphen der transversalen Strahlaberrationen des Makro-Objektivs als Funktion der Pupillenkoordinaten-bei deaktiviertem CAS und einem Abbildungsmaßstab von-2,0 für die Bildfeldpunkte y' = 0; 20; 28 und 35 mm; |
| Fig. 6A | den Graphen der transversalen Strahlaberrationen des Makro-Objektivs als Funktion der Pupillenkoordinaten-bei aktiviertem CAS und einem Abbildungsmaßstab von $\beta'$ = -1,5 für die Bildfeldpunkte y' = 0; 20; 28 |

und 35 mm;

Fig. 6B den Graphen der transversalen Strahlaberrationen des Makro-Objektivs als Funktion der Pupillenkoordinaten-bei deaktiviertem CAS und einem Abbildungsmaßstab von-1,5 für die Bildfeldpunkte y' = 0; 20; 28 und 35 mm;

Fig. 7A den Graphen der transversalen Strahlaberrationen des Makro-Objektivs als Funktion der Pupillenkoordinaten-bei aktiviertem CAS und einem Abbildungsmaßstab von β' = -1,0 für die Bildfeldpunkte y' = 0; 20; 28 und 35 mm;

Fig. 7B den Graphen der transversalen Strahlaberrationen des Makro-Objektivs als Funktion der Pupillenkoordinaten-bei deaktiviertem CAS und einem Abbildungsmaßstab von-1,0 für die Bildfeldpunkte y' = 0; 20; 28 und 35 mm;

Fig. 8A den Graphen der transversalen Strahlaberrationen des Makro-Objektivs als Funktion der Pupillenkoordinaten-bei aktiviertem CAS und einem Abbildungsmaßstab von β' = -0,667 für die Bildfeldpunkte y' = 0; 20; 28 und 35 mm;

Fig. 8B den Graphen der transversalen Strahlaberrationen des Makro-Objektivs als Funktion der Pupillenkoordinaten-bei deaktiviertem CAS und einem Abbildungsmaßstab von-0,667 für die Bildfeldpunkte y' = 0; 20; 28 und 35 mm;

Fig. 9A den Graphen der transversalen Strahlaberrationen des Makro-Objektivs als Funktion der Pupillenkoordinaten-bei aktiviertem CAS und einem Abbildungsmaßstab von β' = -0,5 für die Bildfeldpunkte y' = 0; 20; 28 und 35 mm;

Fig. 9B den Graphen der transversalen Strahlaberrationen des Makro-Objektivs als Funktion der Pupillenkoordinaten-bei deaktiviertem CAS und einem Abbildungsmaßstab von-0,5 für die Bildfeldpunkte y' = 0; 20; 28 und 35 mm;

Fig. 10A den Graphen des Farbvergrößerungsfehlers des Makro-Objektivs für die Schwerstrahlen der Wellenlänge r und g bei einem Abbildungsmaßstab von β' = -2,0;

Fig. 10B den Graphen des Farbvergrößerungsfehlers des Makro-Objektivs für die Schwerstrahlen der Wellenlänge r und g bei einem Abbildungsmaßstab von β' = -1,5;

Fig. 10C den Graphen des Farbvergrößerungsfehlers des Makro-Objektivs für die Schwerstrahlen der Wellenlänge r und g bei einem Abbildungsmaßstab von β' = -0,667;

Fig. 10D den Graphen des Farbvergrößerungsfehlers des Makro-Objektivs für die Schwerstrahlen der Wellenlänge r und g bei einem Abbildungsmaßstab von β' = -0,5;

Fig. 11A den Graphen für den Verlauf der meridionalen und sagittalen Bildschale und der Verzeichnung des Makro-Objektivs für die Hauptfarbe e als Funktion der Bildhöhe bei einem Abbildungsmaßstab von β' = -2,0;

Fig. 11B den Graphen für den Verlauf der meridionalen und sagittalen Bildschale und der Verzeichnung des Makro-Objektivs für die Hauptfarbe e als Funktion der Bildhöhe bei einem Abbildungsmaßstab von β' = -1,5;

Fig. 11C den Graphen für den Verlauf der meridionalen und sagittalen Bildschale und der Verzeichnung des Makro-Objektivs für die Hauptfarbe e als Funktion der Bildhöhe bei einem Abbildungsmaßstab von β' = -0,667;

Fig. 11D den Graphen für den Verlauf der meridionalen und sagittalen Bildschale und der Verzeichnung des Makro-Objektivs für die Hauptfarbe e als Funktion der Bildhöhe bei einem Abbildungsmaßstab von β' = -0,5

Fig. 12A den Graphen des Farbortsfehlers als Funktion der Wellenlänge bei einem Abbildungsmaßstab β' = -2,0;

Fig. 12B den Graphen des Farbortsfehlers als Funktion der Wellenlänge bei einem Abbildungsmaßstab β' = -1,5;

Fig. 12C den Graphen des Farbortsfehlers als Funktion der Wellenlänge bei einem Abbildungsmaßstab β' = -1,0;

Fig. 12D den Graphen des Farbortsfehlers als Funktion der Wellenlänge bei einem Abbildungsmaßstab β' = -0,667;

Fig. 12E den Graphen des Farbortsfehlers als Funktion der Wellenlänge bei einem Abbildungsmaßstab β' = -0,5;

Fig. 13A die Modulations-Transfer-Funktion (MTF) als Funktion der Bildhöhe

-bei aktiviertem CAS,
-bei einem Abbildungsmaßstab β' = -2,0,
-bei einer Systemanfangsöffnung k = 5,2, und
-für die Ortsfrequenzen 10, 25 und 50 lp/mm;

Fig. 13B die Modulations-Transfer-Funktion (MTF) als Funktion der Bildhöhe

-bei aktiviertem CAS,
-bei einem Abbildungsmaßstab β' = -1,5,
-bei einer Systemanfangsöffnung k = 5,2, und
-für die Ortsfrequenzen 10, 25 und 50 lp/mm;

Fig. 13C die Modulations-Transfer-Funktion (MTF) als Funktion der Bildhöhe

-bei aktiviertem CAS,
-bei einem Abbildungsmaßstab β' = -0,667,
-bei einer Systemanfangsöffnung k = 5,2, und
-für die Ortsfrequenzen 10, 25 und 50 lp/mm;

Fig. 13D die Modulations-Transfer-Funktion (MTF) als Funktion der Bildhöhe

-bei aktiviertem CAS,

-bei einem Abbildungsmaßstab β' = -0,5,

-bei einer Systemanfangsöffnung k = 5,2, und

-für die Ortsfrequenzen 10, 25 und 50 lp/mm;

Fig. 14A die Modulations-Transfer-Funktion (MTF) als Funktion der Bildhöhe

-bei deaktiviertem CAS,
-bei einem Abbildungsmaßstab β' = -2,0,
-bei einer Systemanfangsöffnung k = 5,2, und
-für die Ortsfrequenzen 10, 25 und 50 lp/mm;

Fig. 14B die Modulations-Transfer-Funktion (MTF) als Funktion der Bildhöhe

-bei deaktiviertem CAS,
-bei einem Abbildungsmaßstab β' = -1,5,
-bei einer Systemanfangsöffnung k = 5,2, und
-für die Ortsfrequenzen 10, 25 und 50 lp/mm;

Fig. 14C die Modulations-Transfer-Funktion (MTF) als Funktion der Bildhöhe

-bei deaktiviertem CAS,
-bei einem Abbildungsmaßstab β' = -0,667,
-bei einer Systemanfangsöffnung k = 5,2, und
-für die Ortsfrequenzen 10, 25 und 50 lp/mm;

Fig. 14D die Modulations-Transfer-Funktion (MTF) als Funktion der Bildhöhe

-bei deaktiviertem CAS,
-bei einem Abbildungsmaßstab β' = -0,5,
-bei einer Systemanfangsöffnung k = 5,2, und
-für die Ortsfrequenzen 10, 25 und 50 lp/mm;

Zusammenfassende Informationen zu den Aberrationsgraphen:

Fig. 4A bis 4E
zeigen das Layout des Ausführungsbeispielobjektivs in fünf Konfigurationen für Abbildungsmaßstab: -2, -1.5, -1, -0.667 und - 0.5.

Fig. 5A bis 9B
Graphen der transversalen Strahlenaberrationen; für vier ausgewählte Fildfeldpunkte mit den Höhen y'[mm]: 0, 20, 28 und 35 werden in Funktion der Pupillenkoordinate PY und PX die Durchstossungskoordinatenfehler in der Abbildungsebene dargestellt. EY(PY) zeigt die meridionale Koma, EY(PX) zeigt die vertikale Komponente der sagittalen Koma (Rinnenfehler). das kleinste Intervall auf der Abszissenachse beträgt 20 μm. aus der Gegenüberstellung der Graphen (oben mit dem aktivierten erfindungsmässigen Korrektionsausgleich CAS, unten mit deaktiviertem CAS) wird die hohe Effizienz der Komakorrektion im ganzen Abbildungsmaßstabs sichtbar.

Fig. 10A bis 10D

Farbvergrößerungsfehler; für die Schwerstrahlen der Wellenlängen "r", "g" wird in der Bildebene für alle Bildhöhen die transversale Abweichung zu dem Schwerstrahl der Hauptfarbe "e" ausgewiesen. Das kleinste Intervall auf der Abszissenachse beträgt 0.1 μm.

Fig. 11A bis 11D
Bildfeldwölbung/Verzeichnung; als Funktion der Bildhöhe wird für die Hauptfarbe "e" der Verlauf der meridionalen und sagittalen Bildschale dargestellt sowie der Gang der Verzeichnung. Das kleinste Teilungsintervall im Verzeichnungsgraphen beträgt 0.02 %.

Fig. 12A bis 12E
Farbortsfehler; für die relative Eintrittspupillenhöhe $h_r = 0$ und $h_r = 1$ wird der Schnittweitenunterschied als Funktion der Wellenlänge dargestellt. Der gezeigte maximale Abszissenwert in pm entspricht einer wellenoptischen Abbildungstiefe $b'_{0.8}$ (Line "e").

Fig. 13A bis 14D
MTF; bei der Systemanfangsöffnung k = 5.2 und für die Ortsfrequenzen 10, 25 und 50 lp/mm wird in Fig. 13A bis 13D die Abbildungsleistung des erfindungsmässigen Objektivs als Funktion der Bildhöhe ausgewiesen.

Fig. 14A bis 14D zeigt die MTF für gleiche Abbildungsparameter jedoch bei deaktiviertem CAS gezeigt.

Die technischen Daten von vorteilhaften Ausführungen des in Fig. 2 dargestellten Makro-Objektivs sind in den Tabellen 1 bis 5 aufgelistet. Im Einzelnen zeigt:

Tab. 1 eine Liste der Bereiche der Konstruktionsparameter: der Radien, Dicken bzw. Luftabstände, der Brechzahlen und der Abbeschen Zahlen des in Fig. 2 dargestellten Makro-Objektivs (Angaben sind bezogen auf die Systembrennweite);
Tab. 2 eine Übersicht über die Büschelausdehnung;
Tab. 3 eine Liste der Radien, der Dicken bzw. Luftabstände, der Brechzahlen und der Abbeschen Zahlen eines konkreten Ausführungsbeispiels des in Fig. 3 dargestellten Makro-Objektivs (Angaben in mm);
Tab. 4 eine Liste der variablen Luftabstände und der Brennweite des konkreten Ausführungsbeispiels aus Tabelle 3 (Angaben in mm); und
Tab. 5 eine Liste der Glasbrechzahlen des konkreten Ausführungsbeispiels aus Tabelle 3 bei einer Temperatur von 20 °C und einem Druck von 1,0 Atmosphären für ausgewählte Wellenlängen.

Fig. 1 zeigt schematisch das erfindungsgemäße Makro-Objektiv mit den optischen Baugruppen A, B, B' und A', deren Längen ebenfalls mit A, B, B' und A' bezeichnet werden. Zwischen den optischen Baugruppen weist das Objektiv die Luftabstände a, b, c und d auf. Das Makro-Objektiv hat eine konstante totale Systemlänge TL. auf der optischen Achse OA sind dargestellt:

- der Vertex V (Schnittpunkt mit der optischen Achse) der Aperturblende APE im System,
- der Vertix $V_A$ der ersten Linsenfläche in Lichtrichtung im System, sowie
- der Vertex $V_{A'}$ der letzten Linsenfläche in Lichtrichtung im System.

Die Luftabstände a, b, c und d erfüllen bei dem Abbildungsmaß. stab β' = -1,0 die Symmetrie-Bedingung:

$$(a+b) = (c+d) \text{ und } (a=d) \text{ und } (b=c).$$

Bei anderen Abbildungsmaßstäben innerhalb des Bereiches von β' = -2,0 bis -0,5 werden - neben dem üblichen Verschieben des Objektivs als Ganzes (siehe Fig. 3) - die optischen Baugruppen B und B' innerhalb des Objektivs mit mechanischen Mitteln gemeinsam entlang der optischen Achse verschoben, wobei bei der Verschiebung der Abstand (b+c) zwischen diesen beiden Baugruppen B und B' konstant bleibt. Konstant bleibt auch die Gesamtlänge TL. Verändert werden also insbesondere die Abstände a und d. Es gilt also:

$$(a+\Delta a) + (b+\Delta b) = (c+\Delta c) + (d+\Delta d)$$

und

$$\Delta a = -\Delta b \qquad \Delta a = \Delta c$$

$$\Delta c = -\Delta d \quad \text{und} \quad \Delta b = \Delta d$$

wobei die Bezeichnung Δ die Änderung der darauf folgenden (für β'=-1 definierten) Größen bedeutet.

Aus diesen Formeln resultiert:

$$\overline{V_A V} = \text{const und} \overline{V V_{A'}}' = const$$

und daraus

$$\overline{V_A V_{A'}} = TL = const$$

In Fig. 2 ist der optische Aufbau der bevorzugten Ausführungsform des Makro-Objektivs dargestellt mit Bezug auf die Größen der Fig. 1. In der Darstellung befindet sich die Objektebene OBJ links und die Abbildungsebene IMA rechts, s bezeichnet die Schnittweite in Richtung der Objektebene OBJ und s' die Schnittweite in Richtung der Bildebene IMA.

Das gezeigte Makro-Objektiv hat in der angegebenen Reihenfolge, von der Objektebene aus betrachtet, folgende Elemente:

a) eine erste positive optische Baugruppe A mit einer Dicke A mit

a1) einer ersten positiven Meniskus-Linse L1 mit einer Dicke d1, wobei deren konvexe Oberfläche R1 in Richtung der Objektebene OBJ und die konkave Oberfläche R2 in Richtung der Bildebene IMA weisen;
a2) einer zweiten negativen Meniskus-Linse L2 mit einer Dicke d3, wobei deren konvexe Oberfläche R3 in Richtung der Objektebene OBJ und die konkave Oberfläche R4 in Richtung der Bildebene IMA weisen;

zwischen den Linsen L1 und L2 ist ein Luftabstand d2;
b) eine zweite nahezu afokale optische Baugruppe B mit einer Dicke B mit

b1) einer dritten positiven Bikonvex-Linse L3 mit einer Dicke d5, wobei deren stärker gekrümmte erste konvexe Oberfläche R5 in Richtung der Objektebene OBJ und die zweite geringer gekrümmte konvexe Oberfläche R6 in Richtung der Bildebene IMA weist;
zwischen den Linsen L2 und L3 ist der Luftabstand a;
b2) einer vierten negativen Bikonkav-Linse L4 mit einer Dicke d6, wobei deren geringer gekrümmte erste konkave Oberfläche R6 in Richtung der Objektebene OBJ und die zweite stärker gekrümmte konkave Oberfläche R7 in Richtung der Bildebene IMA weisen;

die Linsen L3 und L4 sind verkittet;
c) eine Blende APE;
zwischen der Linse 4 und der Blende APE ist der Luftabstand b;
d) eine dritte nahezu afokale optische Baugruppe B' mit einer Dicke B';
zwischen der optischen Baugruppe B' und der Blende APE ist der Luftabstand c;
e)eine vierte positive optische Baugruppe A'.

Die dritte optische Baugruppe B' mit den Linsen L5 und L6 und die vierte positive optische Baugruppe A' mit den Linsen L7 und L8 sind spiegelsymmetrisch zu den optischen Baugruppen A bzw. B vor der Blende APE aufgebaut. Allerdings ist zwischen der dritten und vierten optischen Baugruppe B' und A' der Abstand d. Die einzelnen Radien und Dicken sind in Fig. 2 bezeichnet.

Konkrete Werte finden sich in den Tabellen.

Fig. 3 zeigt entsprechend zu Fig. 2 die Beispielskonfiguration in sequentieller Anordnung der Flächen. Auf diese Darstellung bezieht sich die Tabelle 3.

In den Fig. 4A bis 4E sind die Konfigurationen von Objekt (OBJ), Makro-Objektiv (M) und Bild (IMA) für fünf

verschiedene Abbildungsmaßstäbe dargestellt, nämlich für β' = -2,0; -1,5; -1,0; - 0,667 und -0,5. Die dargestellten Konfigurationen zeigen schematisch die Relationen zwischen der totalen Systemlänge TL des Makro-Objektivs (M), den Objekt- und bildseitigen Schnittweiten s bzw. s' und die Abbildungsverhältnisse zwischen dem Objekt und Bild bei den o.g. Abbildungsmaßstäben.

Die Fig. 5A bis Fig. 9B zeigen die transversalen Strahlaberrationen des bevorzugten Makro-Objektivs als Funktion der Pupillenkoordinaten. Dargestellt sind die Graphen (Fig. 5A-9A) bei aktiviertem CAS und den Abbildungsmaßstäben β' = -2,0; -1,5; -1,0; - 0,667; -0,5. Ebenso dargestellt sind diese Graphen für deaktiviertes CAS (Fig. 5B bis 9B). Bei deaktiviertem CAS befinden sich die nahezu afokalen optischen Baugruppen B, B' in mittlerer, symmetrischer Stellung.

Aus der Gegenüberstellung der Graphen (mit aktiviertem bzw. deaktiviertem erfindungsgemäßen Korrekturausgleich CAS) wird die hohe Effizienz der Komakorrektur im ganzen Abbildungsmaßstabsbereich deutlich.

Die Graphen der Fig. 10A bis 10D zeigen die Farbvergrößerungsfehler für verschiedene Werte von β' bei aktiviertem CAS.

Wie man sieht, ist der Farbvergrößerungsfehler über alle Wellenlängen, Bildhöhen und Abbildungsmaßstäbe sehr klein.

In den Fig. 11A bis 11D sind die Graphen der meridionalen (T) und sagittalen (S) Bildschalen der Bildfeldwölbung (linker Graph) und der Verzeichnung (rechter Graph) des bevorzugten Makro-Objektivs (M) dargestellt.

Die Graphen des Farbortsfehlers (x-Achse) als Funktion der Wellenlänge (y-Achse) sind in den Fig. 12A bis Fig. 12E dargestellt. Sie zeigen den Verlauf bei den Abbildungsmaßstäben β = -2,0; - 1,5; -0,667 und-0,5 und jeweils für die relative Eintrittspupillenhöhe $h_r$ = 0 und $h_r$ = 1. In den Graphiken wird der Schnittweitenunterschied als Funktion der Wellenlänge dargestellt.

Die Fig. 13A bis Fig. 13D zeigen die Modulations-Transfer-Funktion (MTF) bei aktiviertem CAS für die Abbildungsmaßstäbe β' = -2,0; -1,5; -0,667 und -0,5. Die Systemanfangsöffnung beträgt k = 5.2. Die Verläufe werden jeweils für die Ortsfrequenzen 10 (S1, T1), 25 (S2, T2) und 50 (S3, T3) Linienpaare pro mm dargestellt. Dabei zeigen die Graphiken die Modulation (y-Achse) als Funktion der Bildhöhe (x-Achse). Die durchgezogene Linie betrifft radial orientierte Strukturen und die gestrichelte Linie tangential orientierten Strukturen.

Die Figuren 14A bis 14D zeigen in gleicher Weise die Modulations-Transfer-Funktion (MTF), jedoch bei deaktiviertem CAS.

Bezugszeichen

| | |
|---|---|
| IMA | Bildseite |
| M | Makro-Objektiv |
| A | erste positive optische Baugruppe bzw. deren Dicke |
| B | zweite afokale optische Baugruppe bzw. deren Dicke |
| B' | dritte afokale optische Baugruppe bzw. deren Dicke |
| A' | vierte positive optische Baugruppe bzw. deren Dicke |
| a | Luftabstand |
| b | Luftabstand |
| c | Luftabstand |
| d | Luftabstand |
| APE | Aperturblende |
| V | Vertex der Aperturblende APE |
| $V_A$ | Vertex der ersten (in LiRi) Linsenfläche im System |
| $V_{A'}$ | Vertex der letzten (in LiRi) Linsenfläche im System |
| TL | totale Systemlänge |
| OA | optische Achse |
| L1 | erste positive Meniskus-Linse |
| R1 | erste Oberfläche der ersten positiven Menikus-Linse bzw. deren Radius |
| d1 | Dicke der ersten positiven Meniskus-Linse |
| R2 | zweite Oberfläche der ersten positiven Meniskus-Linse bzw. deren Radius |
| d2 | Luftabstand |
| L2 | zweite negative Meniskus-Linse |
| R3 | erste Oberfläche der zweiten negativen Meniskus-Linse bzw. deren Radius |
| d3 | Dicke der zweiten negativen Meniskus-Linse |
| R4 | zweite Oberfläche der zweiten negativen Meniskus-Linse bzw. deren Radius |

d4 Luftabstand
L3 dritte positive Bikonvex-Linse
R5 erste Oberfläche der dritten positiven Bikonvex-Linse bzw. deren Radius
d5 Dicke der dritten positiven Bikonvex-Linse
R6 zweite Oberfläche der dritten positiven Bikonvex-Linse und erste Oberfläche der vierten negativen Bikonkav-Linse bzw. deren Radien
L4 vierte negative Bikonkav-Linse
d6 Dicke der vierten negativen Bikonkav-Linse
R7 zweite Oberfläche der vierten negativen Bikonkav-Linse bzw. deren Radius
d7 Luftabstand
d8 Luftabstand
L5 fünfte negative Bikonkav-Linse
R9 erste Oberfläche der fünften negativen Bikonkav-Linse bzw. deren Radius
d9 Dicke der fünften negativen Bikonkav-Linse
R10 zweite Oberfläche der fünften negativen Bikonkav-Linse und erste Oberfläche der sechsten positiven Bikonvex-Linse bzw. deren Radien
L6 sechste positive Bikonvex-Linse
d10 Dicke der sechsten positiven Bikonvex-Linse
R11 zweite Oberfläche der sechsten positiven Bikonvex-Linse bzw. deren Radius
d11 Luftabstand
L7 siebente negative Meniskus-Linse
R12 erste Oberfläche der siebenten negativen Meniskus-Linse bzw. deren Radius
d12 Dicke der siebenten negativen Meniskus-Linse
R13 zweite Oberfläche der siebenten negativen Meniskus-Linse bzw. deren Radius
d13 Luftabstand
L8 achte positive Meniskus-Linse
R14 erste Oberfläche der achten positiven Meniskus-Linse bzw. deren Radius
d14 Dicke der achten positiven Meniskus-Linse
R15 zweite Oberfläche der achten positiven Meniskus-Linse bzw. deren Radius
s Schnittweite auf den in Lichtrichtung ersten Systemvertex bezogen
s' Schnittweite auf den in Lichtrichtung letzten Systemvertex bezogen
OBJ Objektseite

Verzeichnis der zitierten Literatur

(1) Marechal, A.: Optique geometrique generale In Handbuch der Physik (hrsg. von S. Flügge) Bd. XXIV, Grundlagen der Optik, Springer Verlag, Berlin 1956

(2) Dietzsch, E.: Zur Tiefenabbildung der Pupille Feingerätetechnik 26 (1977) 1, S. 3-5

(3) Slyusarev, G.G.: Aberration and Optical Design Theory, Adam Hilger Ltd., Bristol 1984

(4) Wynne, C.G.: Proc. Phys. Soc. 65B 429-437 (1952)

Tabelle 3

| Bezugszeichen | Radius | Dicke |
|---|---|---|
| OBJ | - | - |
| R1 | 40,2957 | |
| d1 | | 3,3610 |
| R2 | 103,3874 | |
| d2 | | 0,2000 |

(fortgesetzt)

| Bezugszeichen | Radius | Dicke |
|---|---|---|
| R3 | 40,0797 | |
| d3 | | 3,8298 |
| R4 | 21,5114 | |
| a | | var. |
| R5 | 22,3300 | |
| d5 | | 4,3541 |
| R6 | -532,7755 | |
| d6 | | 1,3790 |
| R7 | 25,5872 | |
| b | | var. |
| APE | - | |
| c | | var. |
| R9 | -25,5872 | |
| d9 | | 1,3790 |
| R10 | 532,7755 | |
| d10 | | 4,3541 |
| R11 | -22,3300 | |
| d | | var. |
| R12 | -21,5114 | |
| d12 | | 3,8298 |
| R13 | -40,0797 | |
| d13 | | 0,2000 |
| R14 | -103,3874 | |
| d14 | | 3,3610 |
| R15 | -40,2957 | |
| IMA | - | - |

Tabelle 4

| β' | s | a | b | c | d | s' | f'e |
|---|---|---|---|---|---|---|---|
| -0,5 | 277,72586 | 0,428354 | 7,375532 | 6,161454 | 1,642433 | 126,90085 | 100,00023 |
| -0,667 | 227,58331 | 0,655374 | 7,148512 | 6,388474 | 1,415413 | 143,72917 | 100,00009 |
| -1 | 177,32673 | 1,035393 | 6,768493 | 6,768493 | 1,035394 | 177,27850 | 100,00000 |
| -1,5 | 143,75423 | 1,388107 | 6,415779 | 7,121207 | 0,682680 | 227,45924 | 100,00008 |
| -2 | 126,91469 | 1,642432 | 6,161454 | 7,375532 | 0,428355 | 277,55699 | 100,00023 |

Tabelle 5

| Bezugszeichen | Temp [°C] | Druck [atm] | n(479,991) | n(587,562) | n(643,847) | n(546,074) | n(435,834) | n(706,519) |
|---|---|---|---|---|---|---|---|---|
| s | 20,00 | 1,00 | 1,00000000 | 1,00000000 | 1,00000000 | 1,00000000 | 1,00000000 | 1,00000000 |
| d1 | 20,00 | 1,00 | 1,89947413 | 1,88298688 | 1,87756517 | 1,88813301 | 1,91047201 | 1,87297150 |
| d2 | 20,00 | 1,00 | 1,00000000 | 1,00000000 | 1,00000000 | 1,00000000 | 1,00000000 | 1,00000000 |
| d3 | 20,00 | 1,00 | 1,62380231 | 1,61336019 | 1,60987373 | 1,61663828 | 1,63070825 | 1,60687728 |
| a | 20,00 | 1,00 | 1,00000000 | 1,00000000 | 1,00000000 | 1,00000000 | 1,00000000 | 1,00000000 |
| d5 | 20,00 | 1,00 | 1,59893595 | 1,59239980 | 1,59019499 | 1,59446588 | 1,60316781 | 1,58830137 |
| d6 | 20,00 | 1,00 | 1,64914993 | 1,63774970 | 1,63395238 | 1,64132482 | 1,65670425 | 1,63069420 |
| b | 20,00 | 1,00 | 1,00000000 | 1,00000000 | 1,00000000 | 1,00000000 | 1,00000000 | 1,00000000 |
| c | 20,00 | 1,00 | 1,00000000 | 1,00000000 | 1,00000000 | 1,00000000 | 1,00000000 | 1,00000000 |
| d9 | 20,00 | 1,00 | 1,64914993 | 1,63774970 | 1,63395238 | 1,64132482 | 1,65670425 | 1,63069420 |
| d10 | 20,00 | 1,00 | 1,59893595 | 1,59239980 | 1,59019499 | 1,59446588 | 1,60316781 | 1,58830137 |
| d | 20,00 | 1,00 | 1,00000000 | 1,00000000 | 1,00000000 | 1,00000000 | 1,00000000 | 1,00000000 |
| d12 | 20,00 | 1,00 | 1,62380231 | 1,61336019 | 1,60987373 | 1,61663828 | 1,63070825 | 1,60687728 |
| d13 | 20,00 | 1,00 | 1,00000000 | 1,00000000 | 1,00000000 | 1,00000000 | 1,00000000 | 1,00000000 |
| d14 | 20,00 | 1,00 | 1,89947413 | 1,88298688 | 1,87756517 | 1,88813301 | 1,91047201 | 1,87297150 |
| s' | 20,00 | 1,00 | 1,00000000 | 1,00000000 | 1,00000000 | 1,00000000 | 1,00000000 | 1,00000000 |

**Patentansprüche**

1. Makro-Objektiv (M),

welches eine Aperturblende (APE), die stationär angeordnet ist, aufweist, und welches, in der angegebenen Reihenfolge, von einer Objektebene (OBJ) aus betrachtet, folgende Elemente aufweist:

eine erste positive optische Baugruppe (A)
eine zweite optische Baugruppe (B)
eine dritte nahezu afokale optische Baugruppe (B');
eine vierte positive optische Baugruppe (A')

wobei die Gesamt-Baulänge (TL) des Makro-Objektivs (M) beim Verschieben der zweiten optischen Baugruppe (B) und der dritten nahezu afokalen optischen Baugruppe (B') unverändert bleibt **dadurch gekennzeichnet, dass** die zweite optische Baugruppe nahezu afokal ist, dadurch dass das Makro-Objektiv (M)
mechanische Mittel zum gemeinsamen Verschieben der zweiten und dritten optischen Baugruppe (B, B') innerhalb des Makro-Objektivs (M) entlang der optischen Achse (OA) aufweist, wodurch bei jeder Verschiebung der Abstand (b + c) zwischen diesen beiden Baugruppen konstant bleibt,
und
wobei
die Aperturblende (APE) gleichem Abstand zum ersten Linsenscheitel der ersten Baugruppe (A) und zum letzten Linsenscheitel der letzten Baugruppe (A') angeordnet ist.

2. Makro-Objektiv nach Anspruch 1,
**dadurch gekennzeichnet,**
**dass** die Brennweite des Makro-Objektivs (M) sich beim gemeinsamen Verschieben der zweiten und dritten optischen Baugruppe (B, B') um maximal $10^{-5}$ multipliziert mit der Brennweite des Makro-Objektivs (M) bei symmetrischer Stellung der zweiten und dritten optischen Baugruppe (B, B') innerhalb des Makro-Objektivs (M) ändert.

3. Makro-Objektiv nach einem der vorhergehendenAnsprüche, **dadurch gekennzeichnet, dass** das Makro-Objektiv (M) für den Vergrößerungsmaßstab $\beta' = -1$ holosymmetrisch aufgebaut ist.

4. Makro-Objektiv nach einem der vorhergehenden Ansprüche, **dadurch gekennzeichnet, dass** es in der angegebenen Reihenfolge, von der Objektebene (OBJ) aus betrachtet, folgende Elemente aufweist:

a) die erste positive optische Baugruppe A mit

a1) einer ersten positiven Linse (L1), und
a2) einer zweiten negativen Linse (L2);

b) die zweite nahezu afokale optische Baugruppe (B) mit

b1) einer dritten positiven Linse (L3), und
b2) einer vierten negativen Linse (L4);

c) die Aperturblende (APE);
d) die dritte nahezu afokale optische Baugruppe (B');
e) die vierte positive optische Baugruppe (A');wobei die dritte optische Baugruppe (B') und die vierte positive optische Baugruppe (A') spiegelsymmetrisch zu den optischen Baugruppen vor der Aperturblende aufgebaut sind.

5. Makro-Objektiv nach einem der vorhergehendenAnsprüche, **dadurch gekennzeichnet, dass** es in der angegebenen Reihenfolge, von der Objektebene (OBJ) aus betrachtet, folgende Elemente aufweist:

a) die erste positive optische Baugruppe (A) mit

a1) einer ersten positiven Meniskus-Linse (L1), und
a2) einer zweiten negativen Meniskus-Linse (L2);

b) die zweite nahezu afokale optische Baugruppe (B) mit

b1) einer dritten positiven Bikonvex-Linse (L3), und
b2) einer vierten negativen Bikonkav-Linse (L4);

c) die Aperturblende (APE);
d) die dritte nahezu afokale optische Baugruppe (B');
e) die vierte positive optische Baugruppe (A'); wobei die dritte optische Baugruppe (B') und die vierte positive optische Baugruppe (A') spiegelsymmetrisch zu den optischen Baugruppen (A, B) vor der Blende aufgebaut sind.

**6.** Makro-Objektiv nach einem der vorhergehendenAnsprüche, **dadurch gekennzeichnet, dass** es in der angegebenen Reihenfolge, von der Objektebene (OBJ) aus betrachtet, folgende Elemente aufweist:

a) die erste positive optische Baugruppe (A) mit

a1) einer ersten positiven Meniskus-Linse,
wobei deren konvexe Oberfläche in Richtung der Objektebene und die konkave Oberfläche in Richtung der Bildebene weisen, und
a2) einer zweiten negativen Meniskus-Linse,
wobei deren konvexe Oberfläche in Richtung der Objektebene und die konkave Oberfläche in Richtung der Bildebene weisen;

b) die zweite nahezu afokale optische Baugruppe (B) mit

b1) einer dritten positiven Bikonvex-Linse,
wobei deren stärker gekrümmte erste konvexe Oberfläche in Richtung der Objektebene und die zweite geringer gekrümmte konvexe Oberfläche in Richtung der Bildebene weist, und
b2) einer vierten negativen Bikonkav-Linse,
wobei deren geringer gekrümmte erste konkave Oberfläche in Richtung der Objektebene und die zweite stärker gekrümmte konkave Oberfläche in Richtung der Bildebene weisen.

c) die Aperturblende (APE);
d) die dritte nahezu afokale optische Baugruppe (B');
e) die vierte positive optische Baugruppe (A'); wobei die dritte optische Baugruppe (B') und die vierte positive optische Baugruppe (A') spiegelsymmetrisch zu den optischen Baugruppen (A, B) vor derBlende aufgebaut sind.

**7.** Makro-Objektiv nach Anspruch 6,
**dadurch gekennzeichnet,**
**dass** die Radien, Dicken, Medienbrechzahlen n und Abbeschen Zahlen v der Linsen sich in folgenden Wertebereichen befinden:

| Bezugszeichen | Radius R [in Einheiten der Systembrennweite $f'_e$] | Dicke d [in Einheiten der Systembrennweite $f'_e$] | Medienbrechzahl $n_d$ | Abbesche Zahl $v_d$ |
|---|---|---|---|---|
| R1 | 0,36 < R1 < 0,44 | | | |
| d1 | | 0,030 < d1 <0,040 | 1,88299 7 | 40,76 |
| R2 | 0,93 < R2 < 1,14 | | | |
| R3 | 0,36 < R3 < 0,44 | | | |
| d3 | | 0,034 < d3 < 0,042 | 1,61336 0 | 44,49 |
| R4 | 0,19 < R4 < 0,24 | | | |
| R5 | 0,20 < R5 < 0,25 | | | |
| d5 | | 0,038 < d5 < 0,048 | 1,59240 0 | 68,40 |

(fortgesetzt)

| | | | | |
|---|---|---|---|---|
| R6 | -5,9 < R6 < - 4,8 | | | |
| d6 | | 0,12 < d6 < 0,015 | 1,63775 0 | 42,41 |
| R7 | 0,23 < R7 < 0,29 | | | |
| b,c | | 0,12 < (b+c) < 0,15 | | |

- wobei die Medienbrechzahlen nd für die Fraunhofer-Linie d ($\lambda$ = 587,5618 nm) angegeben sind und
- wobei die Abbeschen Zahlen *v*d für die Fraunhofer-Linie d ($\lambda$ = 587,5618 nm) angegeben sind,

wobei R1 den Radius der ersten Oberfläche der ersten positiven Menikus-Linse bezeichnet, wobei d1 die Dicke der ersten positiven Meniskus-Linse bezeichnet, wobei R2 den Radius der zweiten Oberfläche der ersten positiven Meniskus-Linse bezeichnet, wobei R3 den Radius der ersten Oberfläche der zweiten negativen Meniskus-Linse bezeichnet, wobei d3 die Dicke der zweiten negativen Meniskus-Linse bezeichnet, wobei R4 den Radius der zweiten Oberfläche der zweiten negativen Meniskus-Linse bezeichnet, wobei R5 den Radius der ersten Oberfläche der dritten positiven Bikonvex-Linse bezeichnet, wobei d5 die Dicke der dritten positiven Bikonvex-Linse bezeichnet, wobei R6 den Radius der zweiten Oberfläche der dritten positiven Bikonvex-Linse und den Radius der ersten Oberfläche der vierten negativen Bikonkav-Linse bezeichnet, wobei d6 die Dicke der vierten negativen Bikonkav-Linse bezeichnet, wobei R7 den Radius der zweiten Oberfläche der vierten negativen Bikonkav-Linse bezeichnet, wobei b den Luftabstand zwischen der zweiten optischen Baugruppe (B) und der Aperturblende (APE) bezeichnet, und wobei c den Luftabstand zwischen der dritten nahezu afokalen optischen Baugruppe (B') und der Aperturblende (APE) bezeichnet.

## Claims

**1.** A macro objective (M) comprising an aperture diaphragm (APE) which is arranged stationary, and comprising, in the order indicated and viewed from an object plane (OBJ), the following elements:

a first positive optical assembly (A);
a second optical assembly (B);
a third almost afocal optical assembly (B');
a fourth positive optical assembly (A'),

wherein the total installation length (TL) of the macro objective (M) remains unmodified when shifting the second optical assembly (B) and the third almost afocal assembly (B'),

**characterized in that**
the second optical assembly is almost afocal,
the macro objective (M) comprises mechanical means for the joint shifting of the second and third optical assemblies (B, B') within the macro objective (M) along the optical axis (OA), whereby the distance (b + c) between these two assemblies remains constant with each shifting, and
wherein the aperture diaphragm (APE) is arranged at equal distance to the first lens apex of the first assembly (A) and to the last lens apex of the last assembly (A').

**2.** The macro objective according to claim 1, **characterized in that**
the focal length of the macro objective (M) changes, during the joint shifting of the second and third optical assemblies (B, B'), by maximally $10^{-5}$ multiplied with the focal length of the macro objective (M) with a symmetrical position of the second and third optical assemblies (B, B') within the macro objective (M).

**3.** The macro objective according to any of the preceding claims, **characterized in that** the macro objective (M) is of holosymmetric structure for the enlargement scale $\beta'$ = -1.

4. The macro objective according to any of the preceding claims, **characterized in that** it comprises, in the order indicated and viewed from the object plane (OBJ), the following elements:

a) the first positive optical assembly (A) with

a1) a first positive lens (L1), and
a2) a second negative lens (L2);

b) the second almost afocal optical assembly (B) with

b1) a third positive lens (L3), and
b2) a fourth negative lens (L4);

c) the aperture diaphragm (APE);
d) the third almost afocal optical assembly (B');
e) the fourth positive optical assembly (A'); wherein the third optical assembly (B') and the fourth positive optical assembly (A') are of mirror-symmetrical structure with respect to the optical assemblies in front of the aperture diaphragm.

5. The macro objective according to any of the preceding claims, **characterized in that** comprises, in the order indicated and viewed from the object plane (OBJ), the following elements:

a) the first positive optical assembly (A) with

a1) a first positive meniscus lens (L1), and
a2) a second negative meniscus lens (L2);

b) the second almost afocal optical assembly (B) with

b1) a third positive biconvex lens (L3), and
b2) a fourth negative biconcave lens (L4);

c) the aperture diaphragm (APE);
d) the third almost afocal optical assembly (B');
e) the fourth positive optical assembly (A'); wherein the third optical assembly (B') and the fourth positive optical assembly (A') are of mirror-symmetrical structure with respect to the optical assemblies (A, B) in front of the diaphragm.

6. The macro objective according to any of the preceding claims, **characterized in that** it comprises, in the order indicated and viewed from the object plane (OBJ), the following elements:

a) the first positive optical assembly (A) with

a1) a first positive meniscus lens (L1),
wherein the convex surface thereof points in the direction of the object plane and the concave surface in the direction of the image plane, and
a2) a second negative meniscus lens (L2),
wherein the convex surface thereof points in the direction of the object plane and the concave surface in the direction of the image plane;

b) the second almost afocal optical assembly (B) with

b1) a third positive biconvex lens,
wherein the stronger-curved first convex surface thereof points in the direction of the object plane and the second less-curved convex surface in the direction of the image plane, and
b2) a fourth negative biconcave lens (L4),
wherein the less-curved first concave surface thereof points in the direction of the object plane and the second stronger-curved concave surface in the direction of the image plane;

c) the aperture diaphragm (APE);
d) the third almost afocal optical assembly (B');
e) the fourth positive optical assembly (A'); wherein the third optical assembly (B') and the fourth positive optical assembly (A') are of mirror-symmetrical structure with respect to the optical assemblies (A, B) in front of the diaphragm.

**7.** The macro objective according to claim 6, **characterized in that** the radii, thicknesses, refractive indices of media n, and Abbe numbers v of the lenses are in the following ranges of values:

| Reference number | Radius R [in units of the system focal length f'] | Thickness d [in units of the system focal length f'] | Refractive index of media n | Abbe number v |
|---|---|---|---|---|
| R1 | 0.36 < R1 < 0.44 | | | |
| d1 | | 0.030 <d1 < 0.040 | 1.88299 7 | 40.76 |
| R2 | 0,93 < R2 < 1.14 | | | |
| R3 | 0.36 < R3 < 0.44 | | | |
| d3 | | 0.034 < d3 < 0.042 | 1.613360 | 44.49 |
| R4 | 0.19 < R4 < 0.24 | | | |
| R5 | 0.20 < R5 < 0.25 | | | |
| d5 | | 0.038 < d5 < 0.048 | 1.59240 0 | 68.40 |
| R6 | -5.9 < R6 < -4.8 | | | |
| d6 | | 0.12 < d6 < 0.015 | 1.637750 | 42.41 |
| R7 | 0.23 < R7 < 0.29 | | | |
| b, c | | 0.12 < (b+c) < 0.15 | | |

- wherein the refractive indices of media nd are indicated for the Fraunhofer line d ($\lambda$ = 587.5618 nm) and
- wherein the Abbe numbers vd are indicated for the Fraunhofer line d ($\lambda$ = 587.5618 nm),

wherein R1 designates the radius of the first surface of the first positive meniscus lens, wherein d1 designates the thickness of the first positive meniscus lens, wherein R2 designates the radius of the second surface of the first positive meniscus lens, wherein R3 designates the radius of the first surface of the second negative meniscus lens, wherein d3 designates the thickness of the second negative meniscus lens, wherein R4 designates the radius of the second surface of the second negative meniscus lens, wherein R5 designates the radius of the first surface of the third positive biconvex lens, wherein d5 designates the thickness of the third positive biconvex lens, wherein R6 designates the radius of the second surface of the third positive biconvex lens and the radius of the first surface of the fourth negative biconcave lens, wherein d6 designates the thickness of the fourth negative biconcave lens, wherein R7 designates the radius of the second surface of the fourth negative biconcave lens, wherein b designates the air distance between the second optical assembly (B) and the aperture diaphragm (APE), and wherein c designates the air distance between the third almost afocal optical assembly (B') and the aperture diaphragm (APE).

## Revendications

**1.** Objectif macro (M),

comprenant un diaphragme d'ouverture (APE) disposé de manière stationnaire et comprenant dans l'ordre indiqué, vu depuis un plan objet (OBJ), les éléments suivants :

un premier ensemble optique positif (A) ;

un deuxième ensemble optique (B) ;
un troisième ensemble optique presque afocal (B') ;
un quatrième ensemble optique positif (A') ;

dans lequel la longueur totale (TL) de l'objectif macro (M) reste inchangée lors du déplacement du deuxième ensemble optique (B) et du troisième ensemble optique presque afocal (B'),
**caractérisé en ce que** le deuxième ensemble optique est presque afocal par le fait que l'objectif macro (M) comprend des moyens mécaniques pour déplacer en commun les deuxième et troisième ensembles optiques (B, B') à l'intérieur de l'objectif macro (M) le long de l'axe optique (OA), de sorte que la distance (b + c) entre lesdits deux ensembles reste constante lors de chaque déplacement, et dans lequel le diaphragme d'ouverture (APE) est disposé à égale distance du premier sommet de lentille du premier ensemble (A) et du dernier sommet de lentille du dernier ensemble (A').

**2.** Objectif macro selon la revendication 1, **caractérisé en ce que**, lors du déplacement commun des deuxième et troisième ensembles optiques (B, B'), la distance focale de l'objectif macro (M) varie au maximum de $10^{-5}$ multiplié par la distance focale de l'objectif macro (M) lorsque les deuxième et troisième ensembles optiques (B, B') sont en position symétrique à l'intérieur de l'objectif macro (M).

**3.** Objectif macro selon l'une des revendications précédentes, **caractérisé en ce que** l'objectif macro (M) est de construction holosymétrique pour l'échelle de grossissement $\beta' = -1$.

**4.** Objectif macro selon l'une des revendications précédentes, **caractérisé en ce qu'**il comprend dans l'ordre indiqué, vu depuis le plan objet (OBJ), les éléments suivants :

a) le premier ensemble optique positif A comprenant

a1) une première lentille positive (L1) et
a2) une deuxième lentille négative (L2) ;

b) le deuxième ensemble optique presque afocal (B) comprenant

b1) une troisième lentille positive (L3) et
b2) une quatrième lentille négative (L4) ;

c) le diaphragme d'ouverture (APE) ;
d) le troisième ensemble optique presque afocal (B') ;
e) le quatrième ensemble optique positif (A') ;

le troisième ensemble optique (B') et le quatrième ensemble optique positif (A') étant construits de manière symétrique par réflexion par rapport aux ensembles optiques avant le diaphragme d'ouverture.

**5.** Objectif macro selon l'une des revendications précédentes, **caractérisé en ce qu'**il comprend dans l'ordre indiqué, vu depuis le plan objet (OBJ), les éléments suivants :

a) le premier ensemble optique positif (A) comprenant

a1) une première lentille ménisque positive (L1) et
a2) une deuxième lentille ménisque négative (L2) ;

b) le deuxième ensemble optique presque afocal (B) comprenant

b1) une troisième lentille biconvexe positive (L3) et
b2) une quatrième lentille biconcave négative (L4) ;

c) le diaphragme d'ouverture (APE) ;
d) le troisième ensemble optique presque afocal (B') ;
e) le quatrième ensemble optique positif (A') ;

le troisième ensemble optique (B') et le quatrième ensemble optique positif (A') étant construits de manière symétrique par réflexion par rapport aux ensembles optiques (A, B) avant le diaphragme.

**6.** Objectif macro selon l'une des revendications précédentes, **caractérisé en ce qu'**il comprend dans l'ordre indiqué, vu depuis le plan objet (OBJ), les éléments suivants :

a) le premier ensemble optique positif (A) comprenant

a1) une première lentille ménisque positive,
dont la surface convexe est dirigée vers le plan objet et la surface concave vers le plan image, et
a2) une deuxième lentille ménisque négative,
dont la surface convexe est dirigée vers le plan objet et la surface concave vers le plan image ;

b) le deuxième ensemble optique presque afocal (B) comprenant

b1) une troisième lentille biconvexe positive,
dont la première surface convexe plus courbée est dirigée vers le plan objet et la deuxième surface convexe moins courbée vers le plan image, et
b2) une quatrième lentille biconcave négative,
dont la première surface concave moins courbée est dirigée vers le plan objet et la deuxième surface concave plus courbée vers le plan image ;

c) le diaphragme d'ouverture (APE) ;
d) le troisième ensemble optique presque afocal (B') ;
e) le quatrième ensemble optique positif (A') ;

le troisième ensemble optique (B') et le quatrième ensemble optique positif (A') étant construits de manière symétrique par réflexion par rapport aux ensembles optiques (A, B) avant le diaphragme.

**7.** Objectif macro selon la revendication 6,
**caractérisé en ce que** les rayons, épaisseurs, indices de réfraction du milieu n et nombres d'Abbe v des lentilles se trouvent dans les plages de valeurs suivantes :

| Signe de référence | Rayon R [en unités de la distance focale du système $f'_e$] | Épaisseur d [en unités de la distance focale du système $f'_e$] | Indice de réfraction du milieu $n_d$ | Nombre d'Abbe $v_d$ |
|---|---|---|---|---|
| R1 | 0,36 < R1 < 0,44 | | | |
| d1 | | 0,030 < d1 <0,040 | 1,88299 7 | 40,76 |
| R2 | 0,93 < R2 < 1,14 | | | |
| R3 | 0,36 < R3 < 0,44 | | | |
| d3 | | 0,034 < d3 < 0,042 | 1,61336 0 | 44,49 |
| R4 | 0,19 < R4 < 0,24 | | | |
| R5 | 0,20 < R5 < 0,25 | | | |
| d5 | | 0,038 < d5 < 0,048 | 1,59240 0 | 68,40 |
| R6 | -5,9 < R6 < - 4,8 | | | |
| d6 | | 0,12 < d6 < 0,015 | 1,63775 0 | 42,41 |
| R7 | 0,23 < R7 < 0,29 | | | |
| b, c | | 0,12 < (b+c) < 0,15 | | |

- les indices de réfraction du milieu nd étant indiqués pour la raie de Fraunhofer d ($\lambda$ = 587,5618 nm) et
- les nombres d'Abbe $v_d$ étant indiqués pour la raie de Fraunhofer d ($\lambda$ = 587,5618 nm),

où R1 désigne le rayon de la première surface de la première lentille ménisque positive, d1 désigne l'épaisseur de la première lentille ménisque positive, R2 désigne le rayon de la deuxième surface de la première lentille ménisque positive, R3 désigne le rayon de la première surface de la deuxième lentille ménisque négative, d3 désigne l'épaisseur de la deuxième lentille ménisque négative, R4 désigne le rayon de la deuxième surface de la deuxième lentille ménisque négative, R5 désigne le rayon de la première surface de la troisième lentille biconvexe positive, d5 désigne l'épaisseur de la troisième lentille biconvexe positive, R6 désigne le rayon de la deuxième surface de la troisième lentille biconvexe positive et le rayon de la première surface de la quatrième lentille biconvexe négative, d6 désigne l'épaisseur de la quatrième lentille biconvexe négative, R7 désigne le rayon de la deuxième surface de la quatrième lentille biconcave négative, b désigne la distance d'air entre le deuxième ensemble optique (B) et le diaphragme d'ouverture (APE), et c désigne la distance d'air entre le troisième ensemble optique presque afocal (B') et le diaphragme d'ouverture (APE).

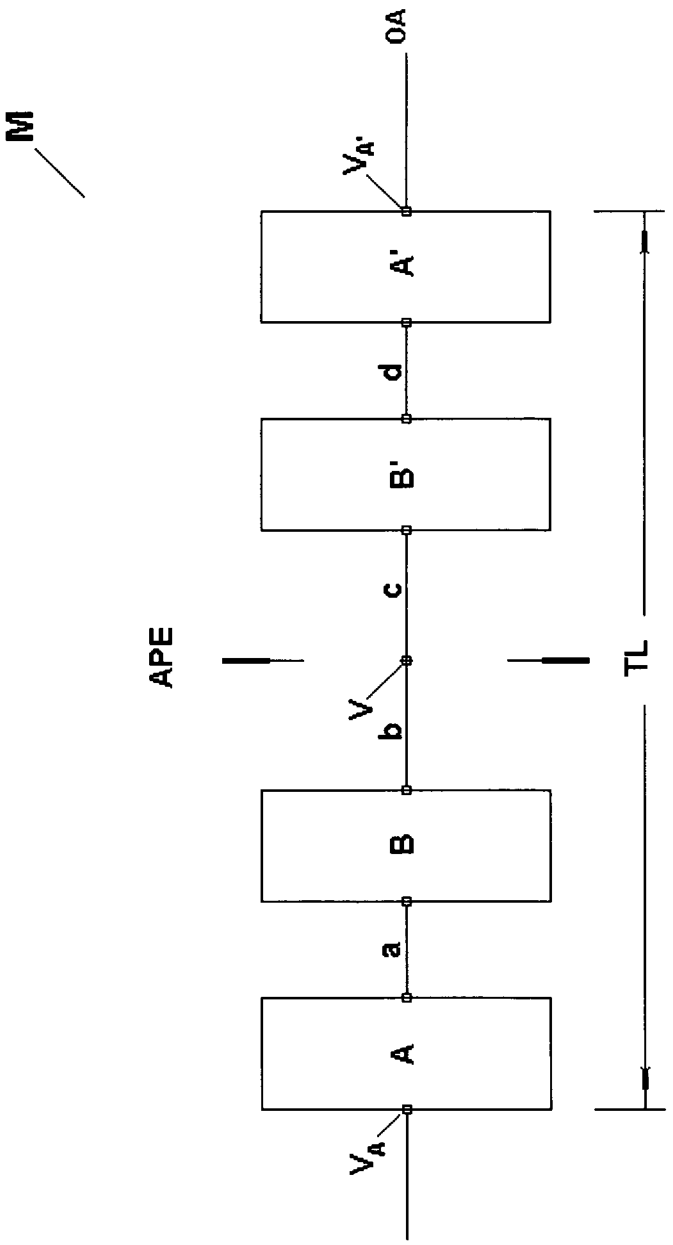


Fig.1

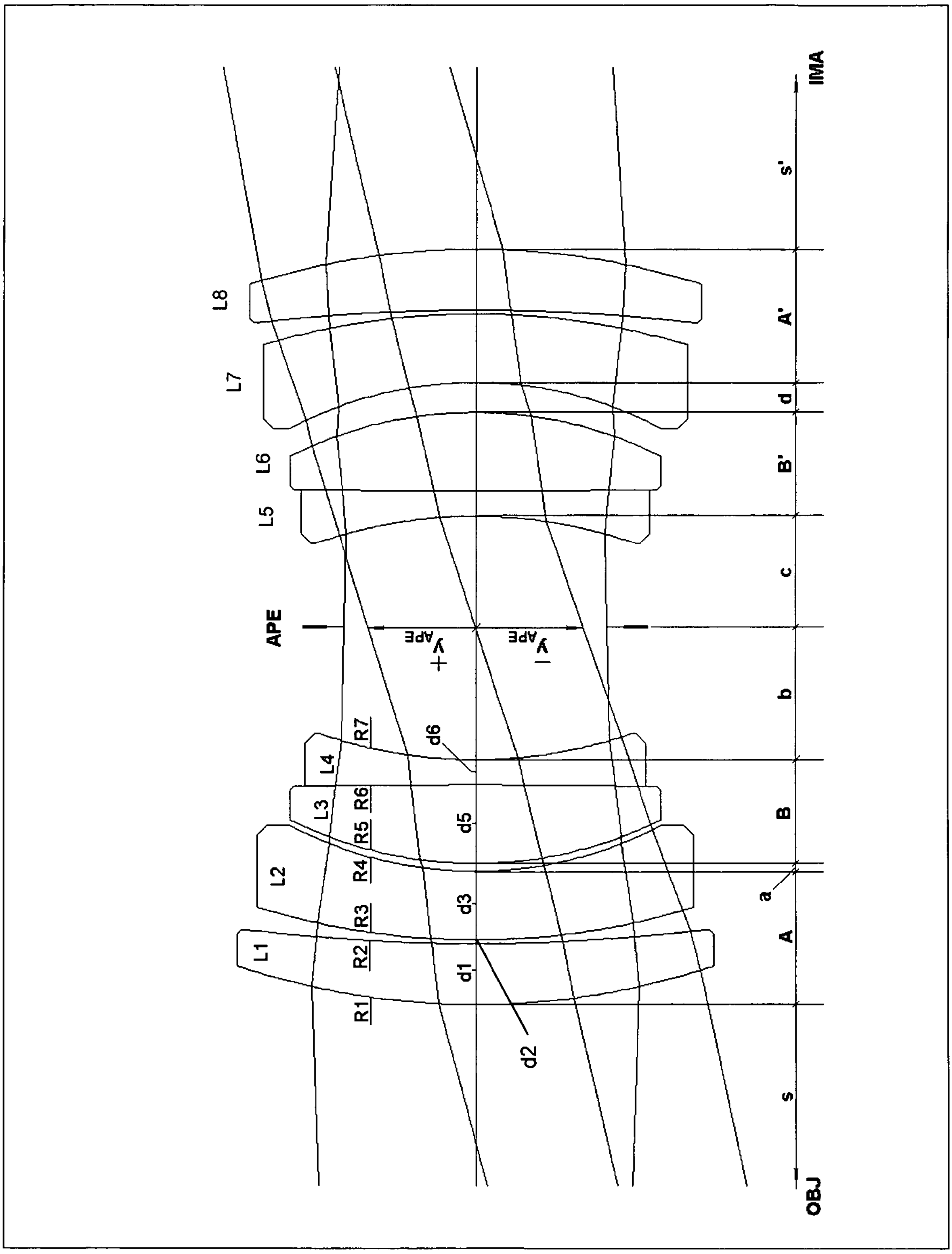
L1
L2
L3
L4
L5
L6
L7
L8
R1
R2
R3
R4
R5
R6
R7
d1
d2
d3
d5
d6
APE
+$y_{APE}$
−$y_{APE}$
OBJ
s
A
a
B
b
c
B'
d
A'
s'
IMA

Fig.2

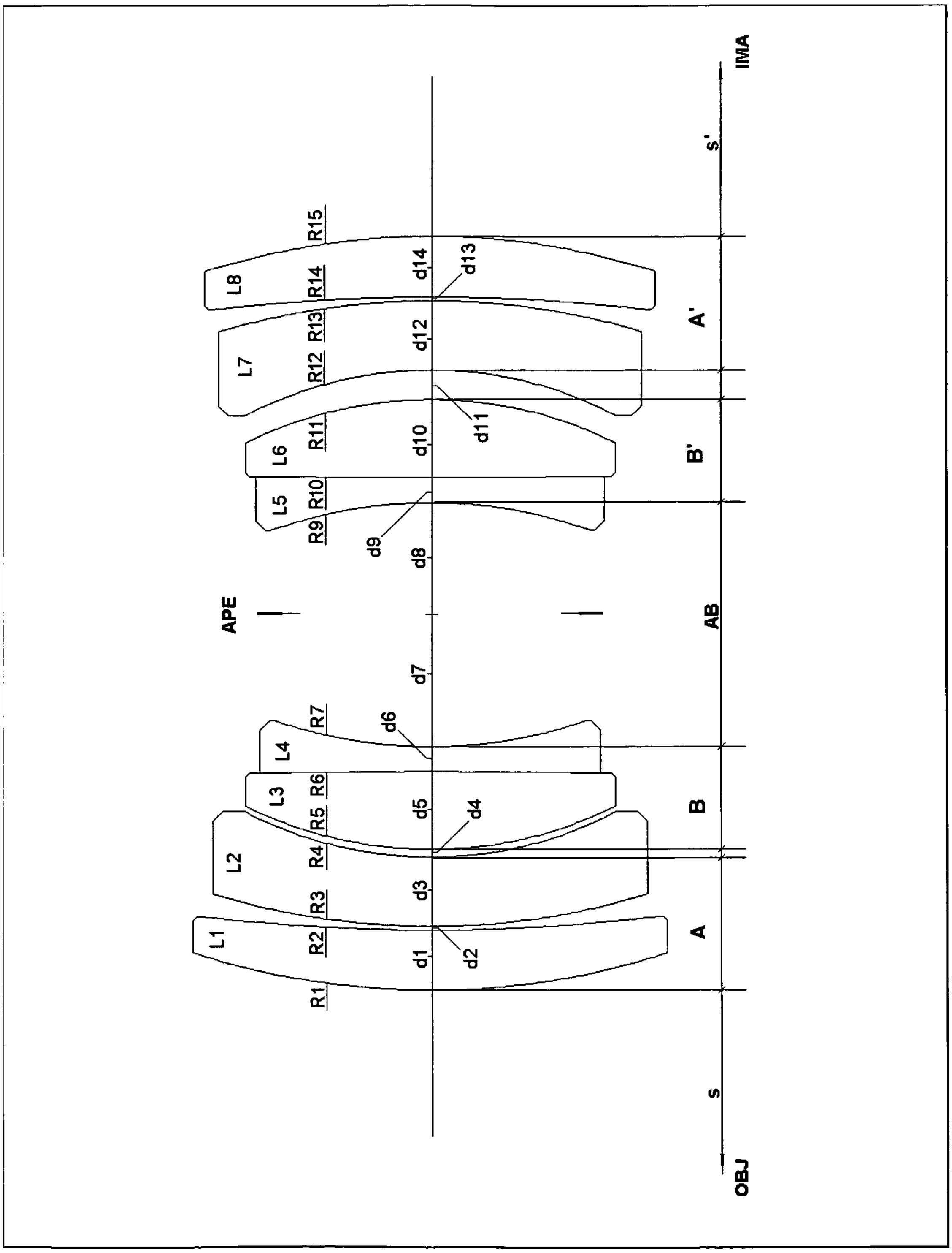
IMA
s'
R15
L8
R14
d14
d13
A'
L7
R13
d12
R12
d11
L6
R11
d10
B'
L5
R10
R9
d9
d8
APE
AB
d7
R7
d6
L4
L3
R6
d5
d4
B
R5
L2
R4
R3
d3
L1
R2
d2
d1
A
R1
s
OBJ

Fig. 3

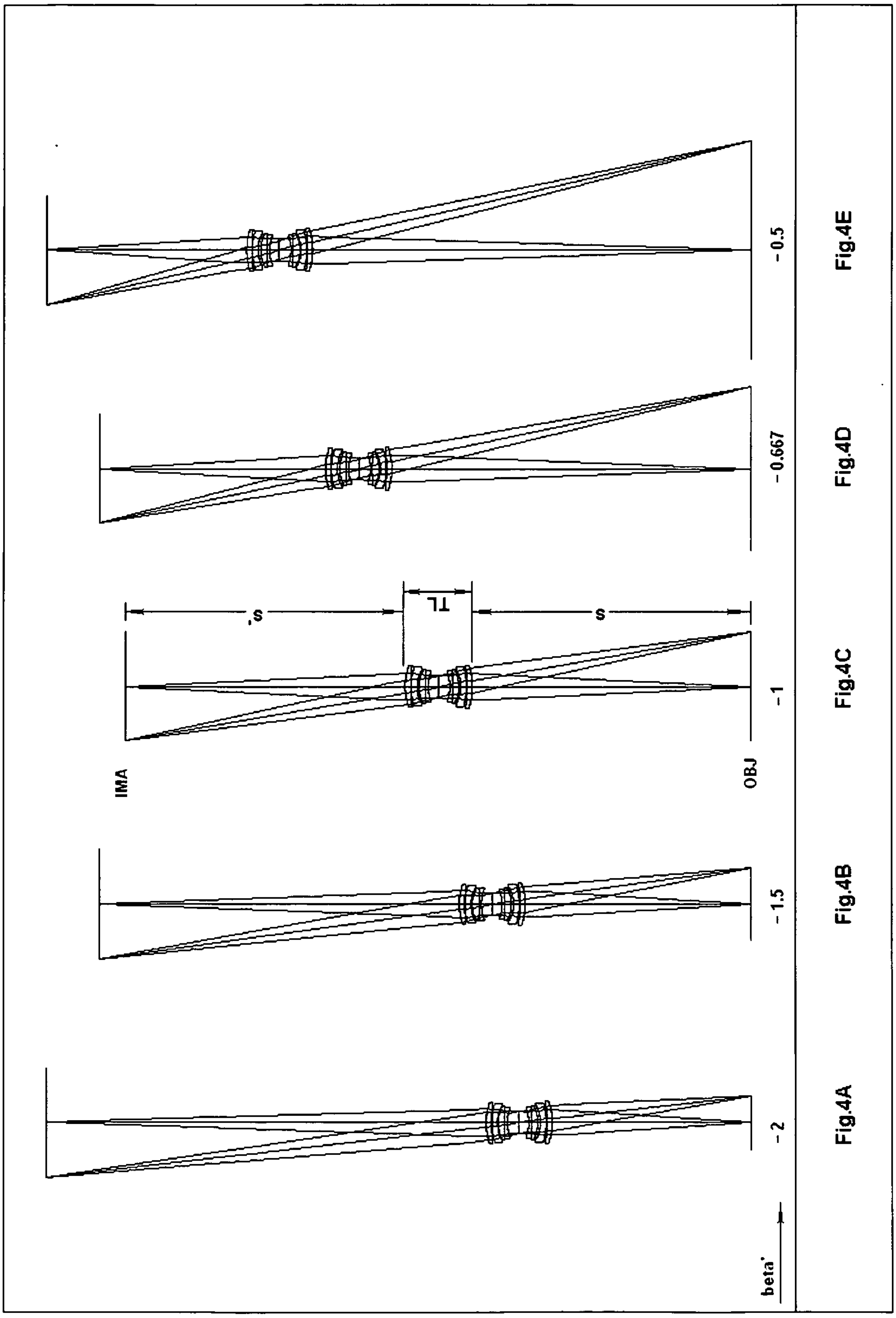


Fig.4

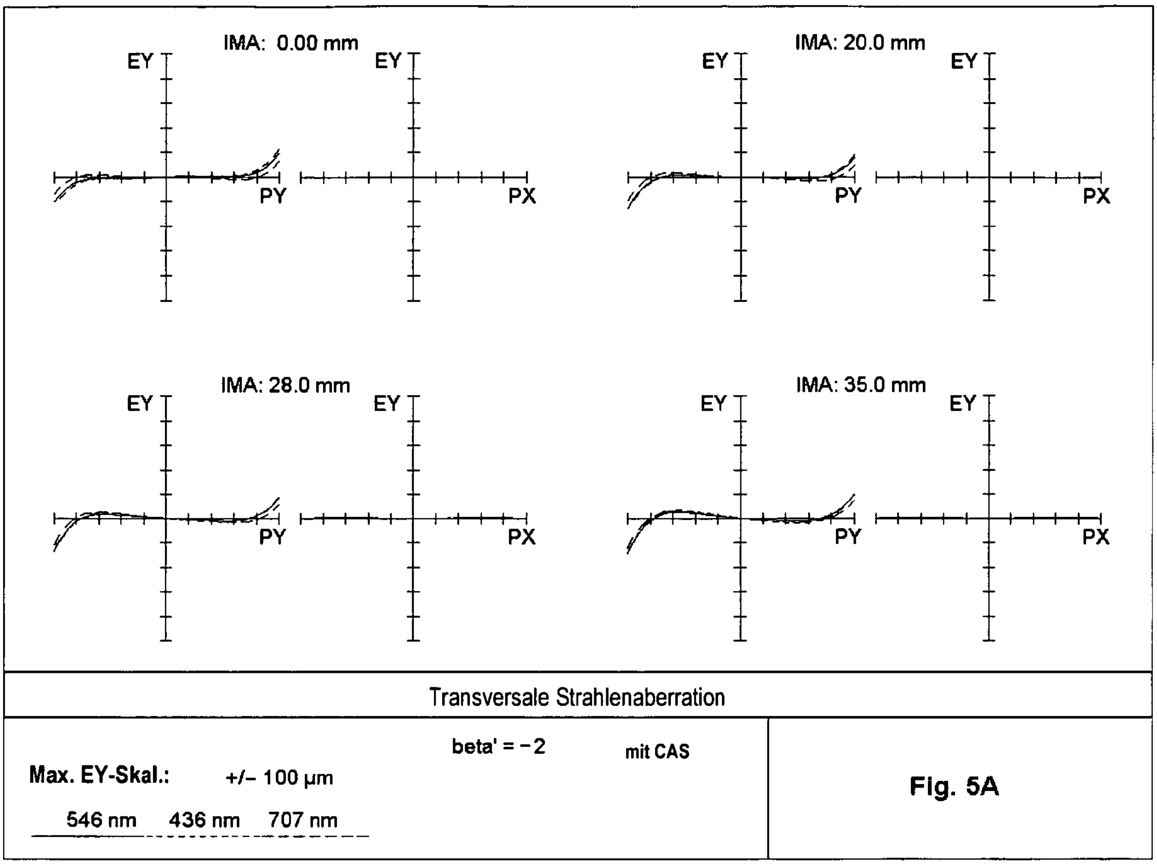
IMA: 0.00 mm
IMA: 20.0 mm
IMA: 28.0 mm
IMA: 35.0 mm
EY
PY
PX
Transversale Strahlenaberration
beta' = −2
mit CAS
Max. EY-Skal.: +/− 100 µm
546 nm 436 nm 707 nm

Fig. 5A

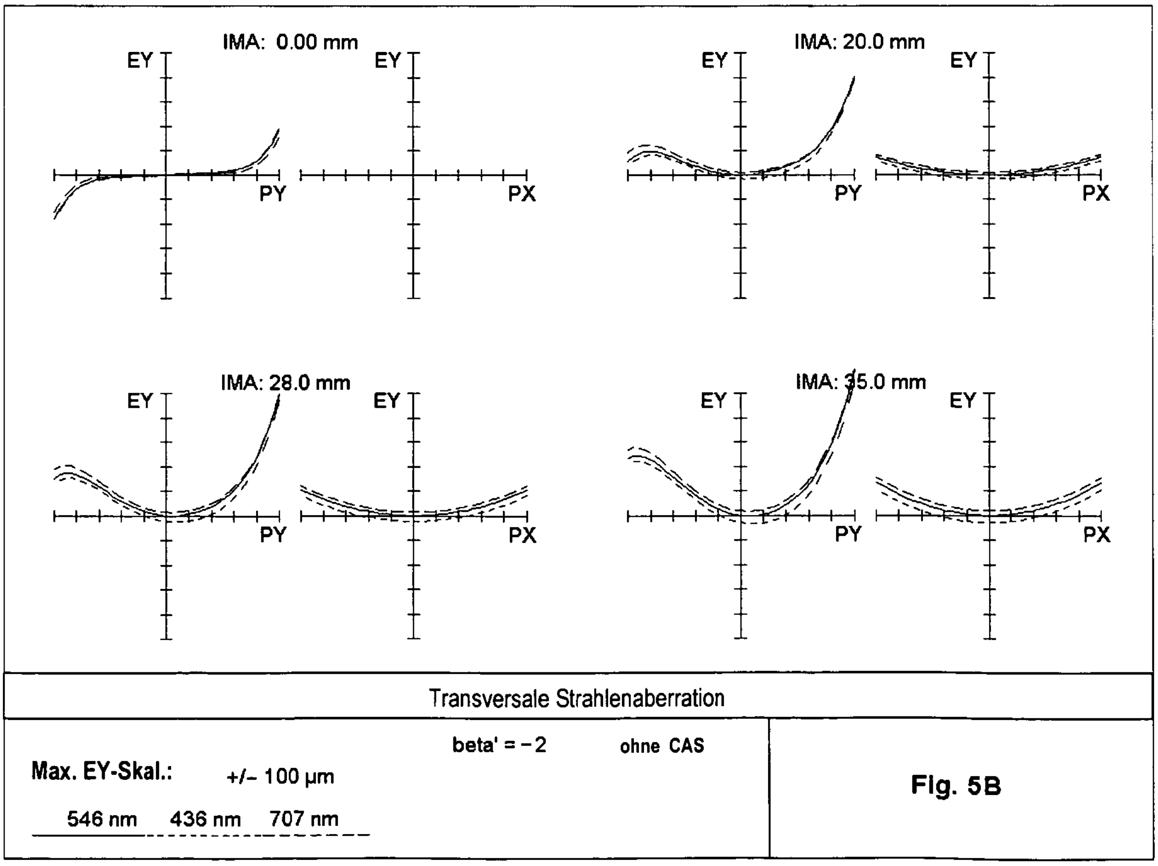
IMA: 0.00 mm
IMA: 20.0 mm
IMA: 28.0 mm
IMA: 35.0 mm
EY
PY
PX
Transversale Strahlenaberration
beta' = −2
ohne CAS
Max. EY-Skal.: +/− 100 µm
546 nm 436 nm 707 nm

Fig. 5B

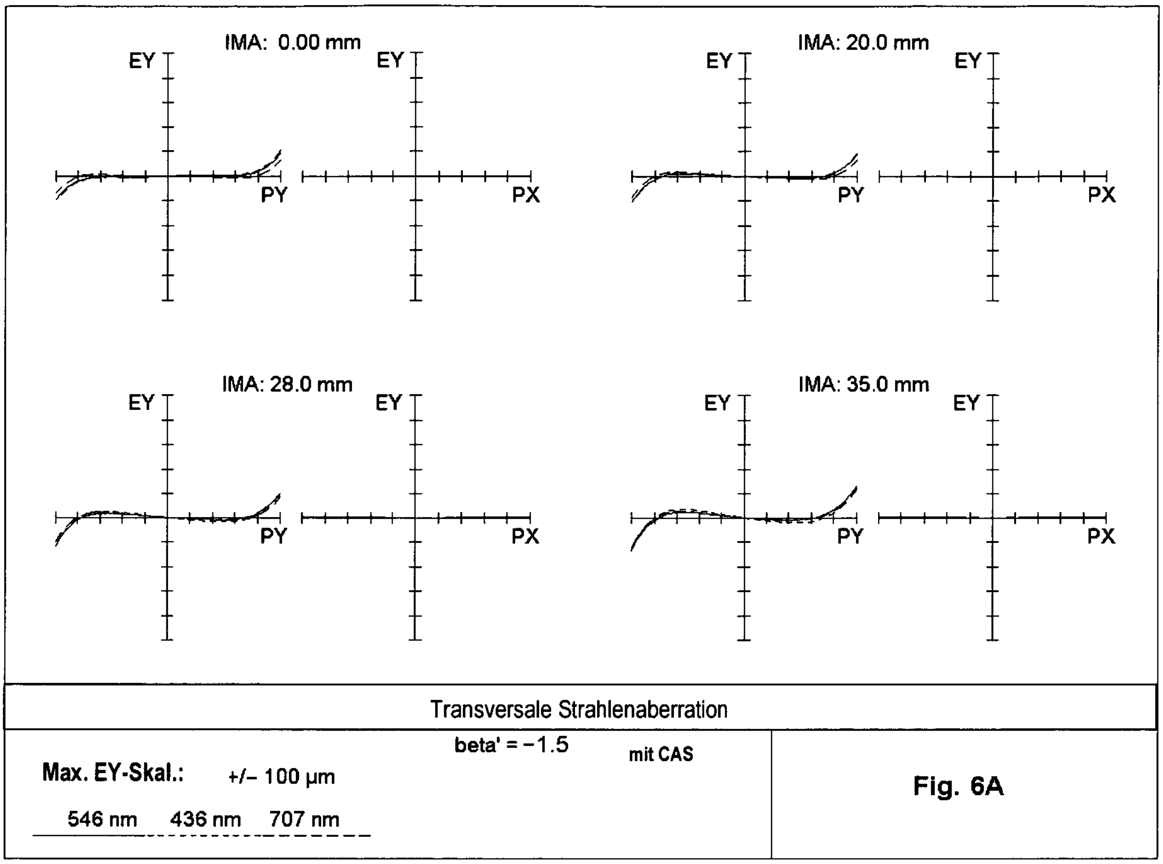
IMA: 0.00 mm
IMA: 20.0 mm
IMA: 28.0 mm
IMA: 35.0 mm
EY
PY
PX
Transversale Strahlenaberration
beta' = −1.5
mit CAS
Max. EY-Skal.: +/− 100 µm
546 nm 436 nm 707 nm

Fig. 6A

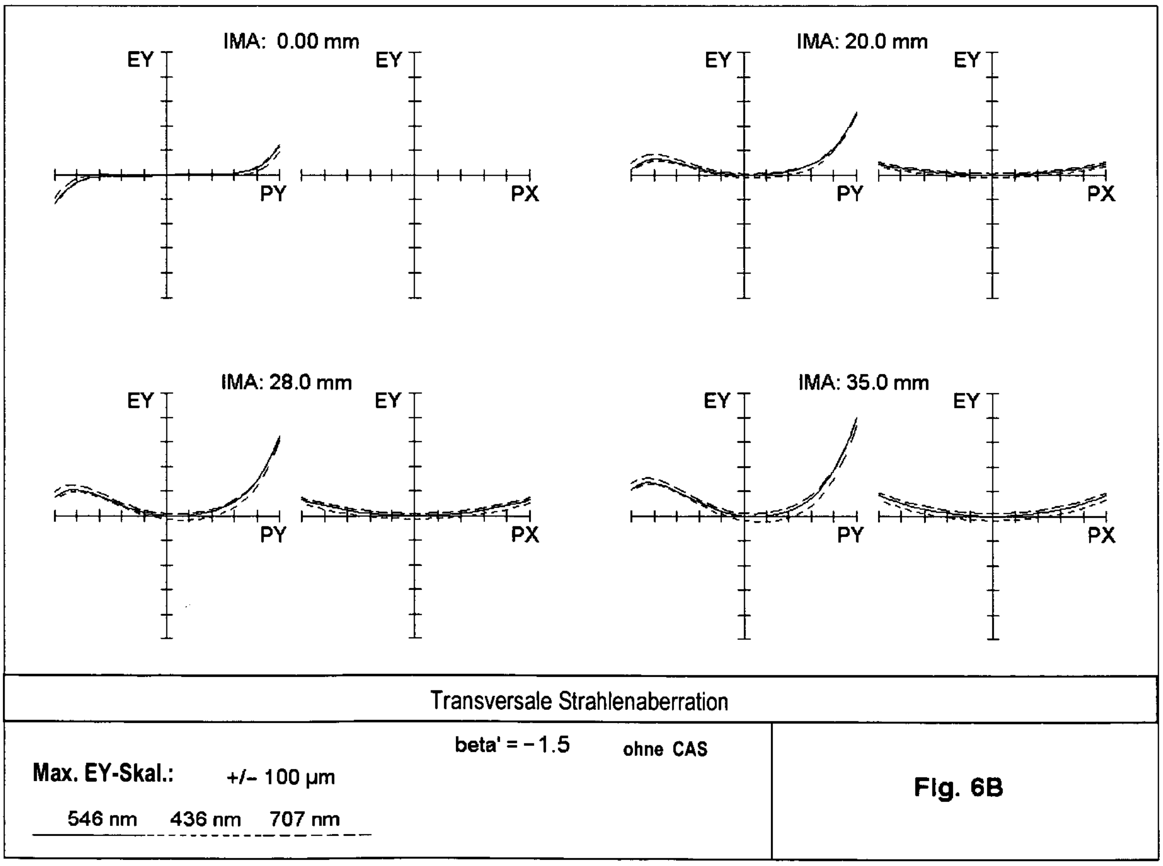
IMA: 0.00 mm
IMA: 20.0 mm
IMA: 28.0 mm
IMA: 35.0 mm
EY
PY
PX
Transversale Strahlenaberration
beta' = −1.5
ohne CAS
Max. EY-Skal.: +/− 100 µm
546 nm 436 nm 707 nm

Fig. 6B

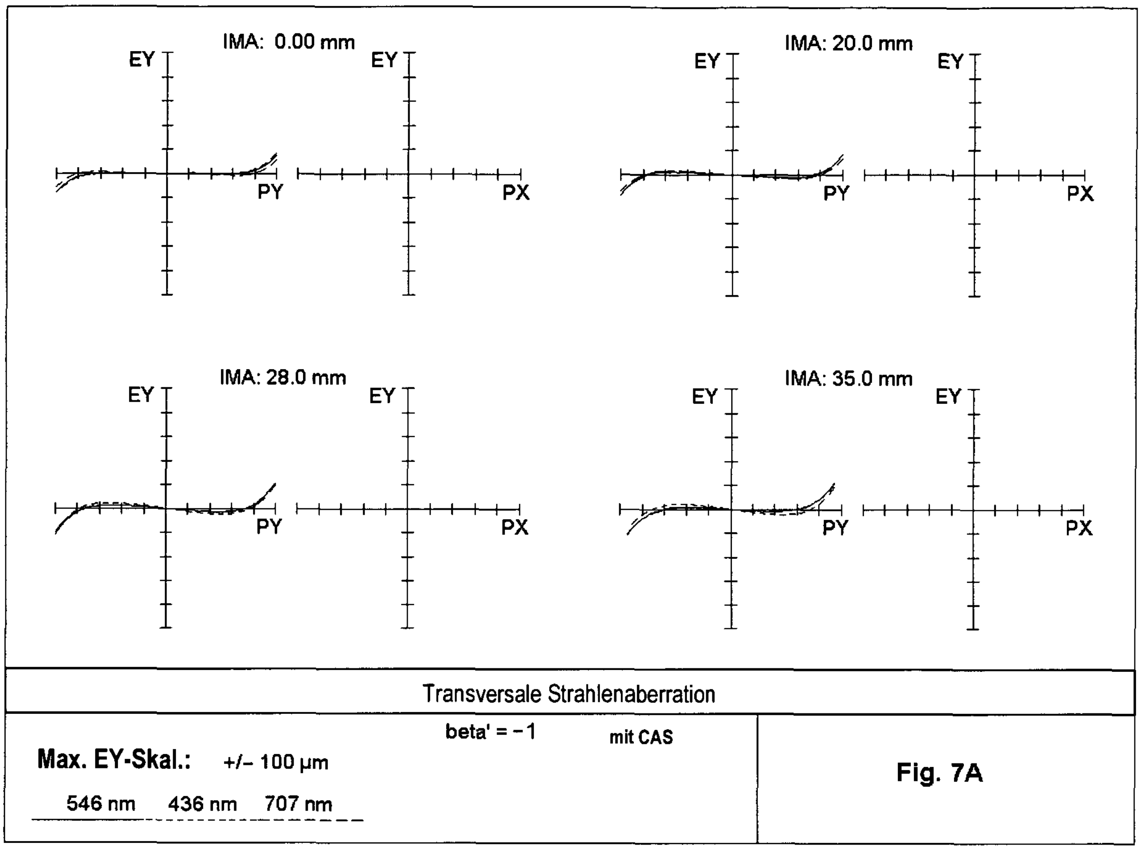


Transversale Strahlenaberration

Max. EY-Skal.: +/- 100 µm

546 nm 436 nm 707 nm

beta' = -1 mit CAS

**Fig. 7A**

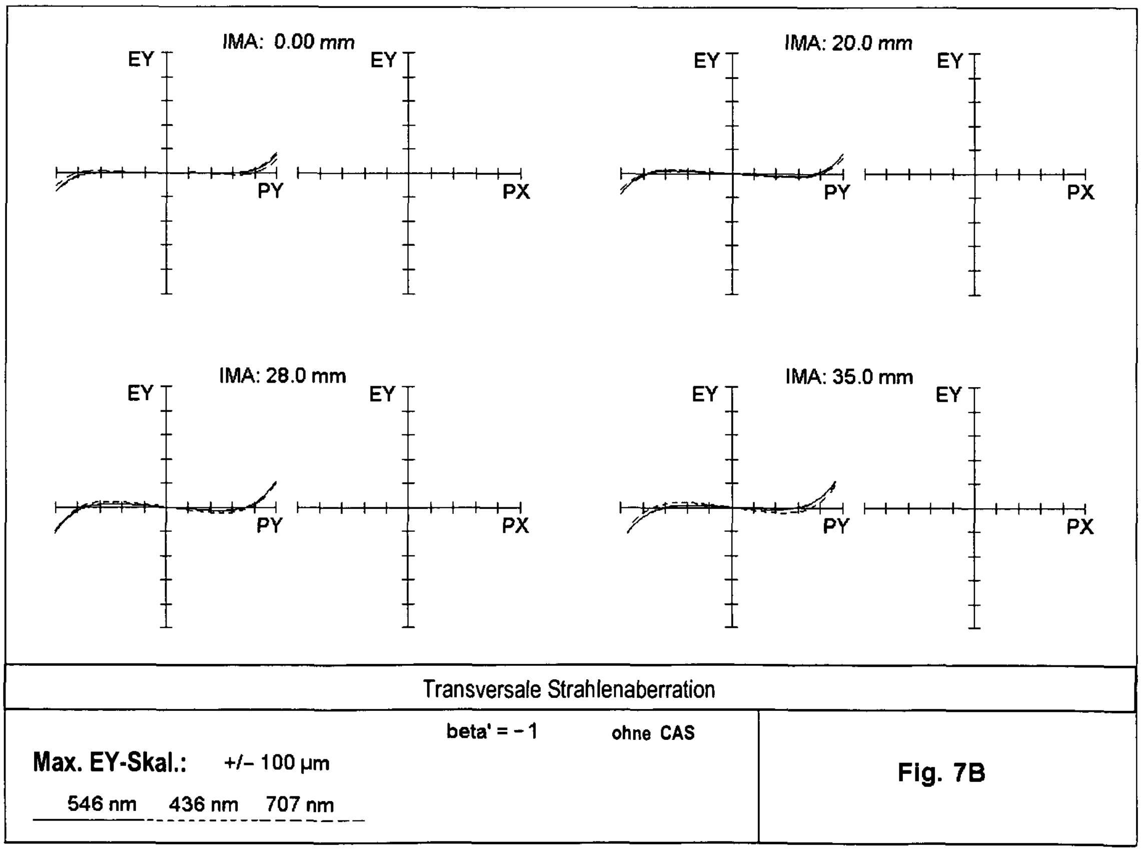


Transversale Strahlenaberration

Max. EY-Skal.: +/- 100 µm

546 nm 436 nm 707 nm

beta' = -1 ohne CAS

**Fig. 7B**

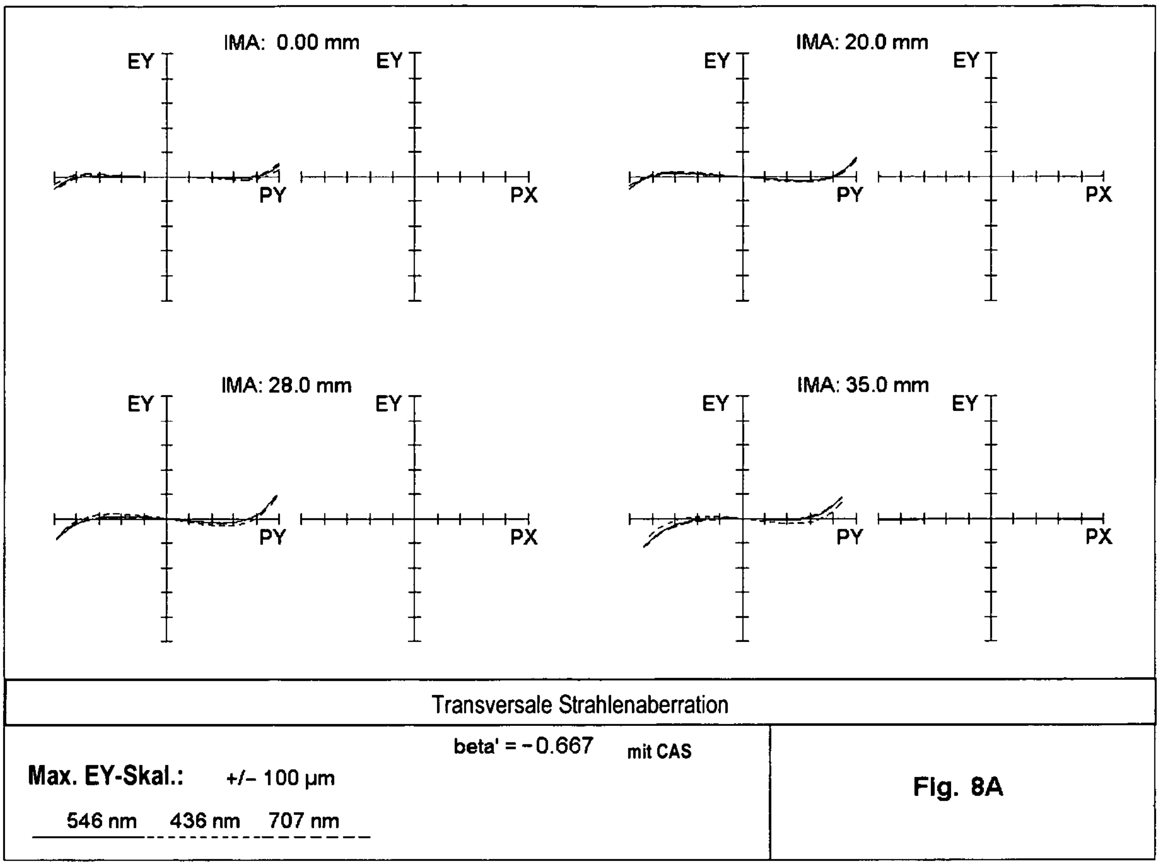
IMA: 0.00 mm
IMA: 20.0 mm
IMA: 28.0 mm
IMA: 35.0 mm
EY
PY
PX
Transversale Strahlenaberration
beta' = -0.667 mit CAS
Max. EY-Skal.: +/- 100 µm
546 nm 436 nm 707 nm

Fig. 8A

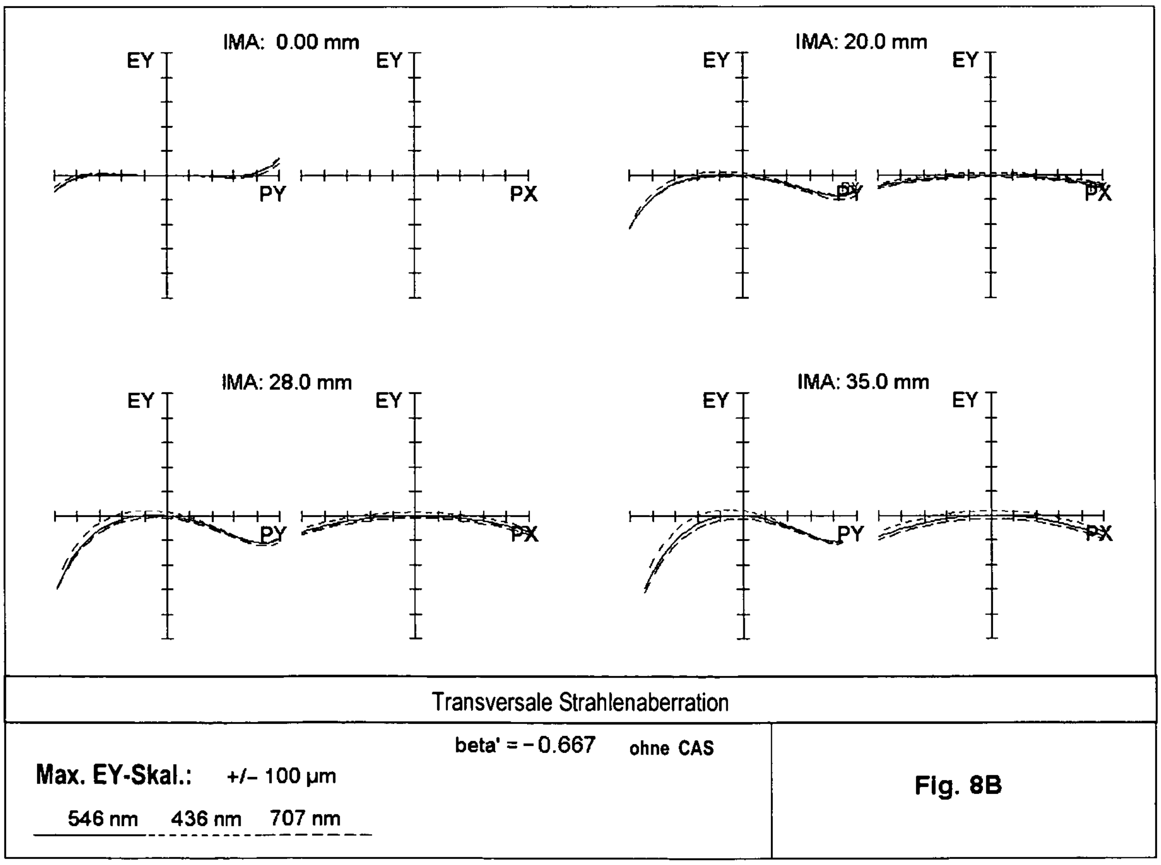
IMA: 0.00 mm
IMA: 20.0 mm
IMA: 28.0 mm
IMA: 35.0 mm
EY
PY
PX
Transversale Strahlenaberration
beta' = -0.667 ohne CAS
Max. EY-Skal.: +/- 100 µm
546 nm 436 nm 707 nm

Fig. 8B

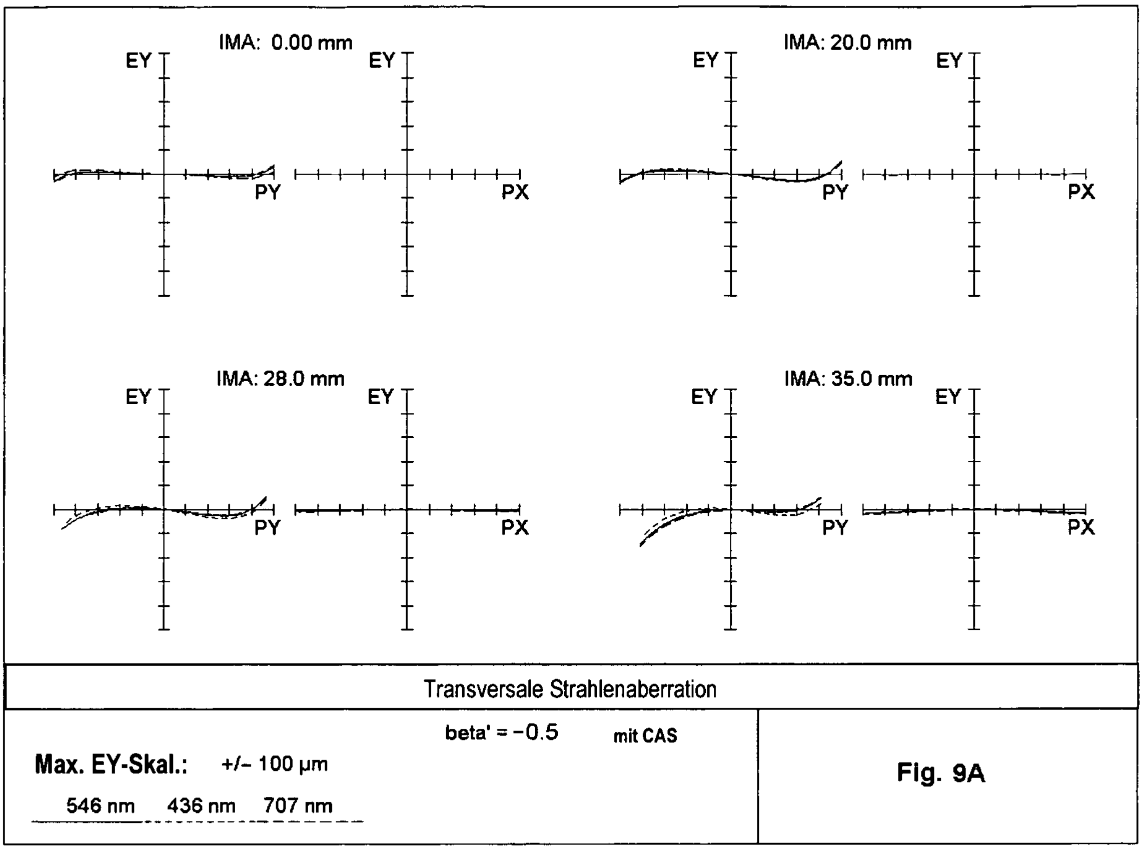


Transversale Strahlenaberration

beta' = -0.5 mit CAS

Max. EY-Skal.: +/- 100 µm

546 nm 436 nm 707 nm

**Fig. 9A**

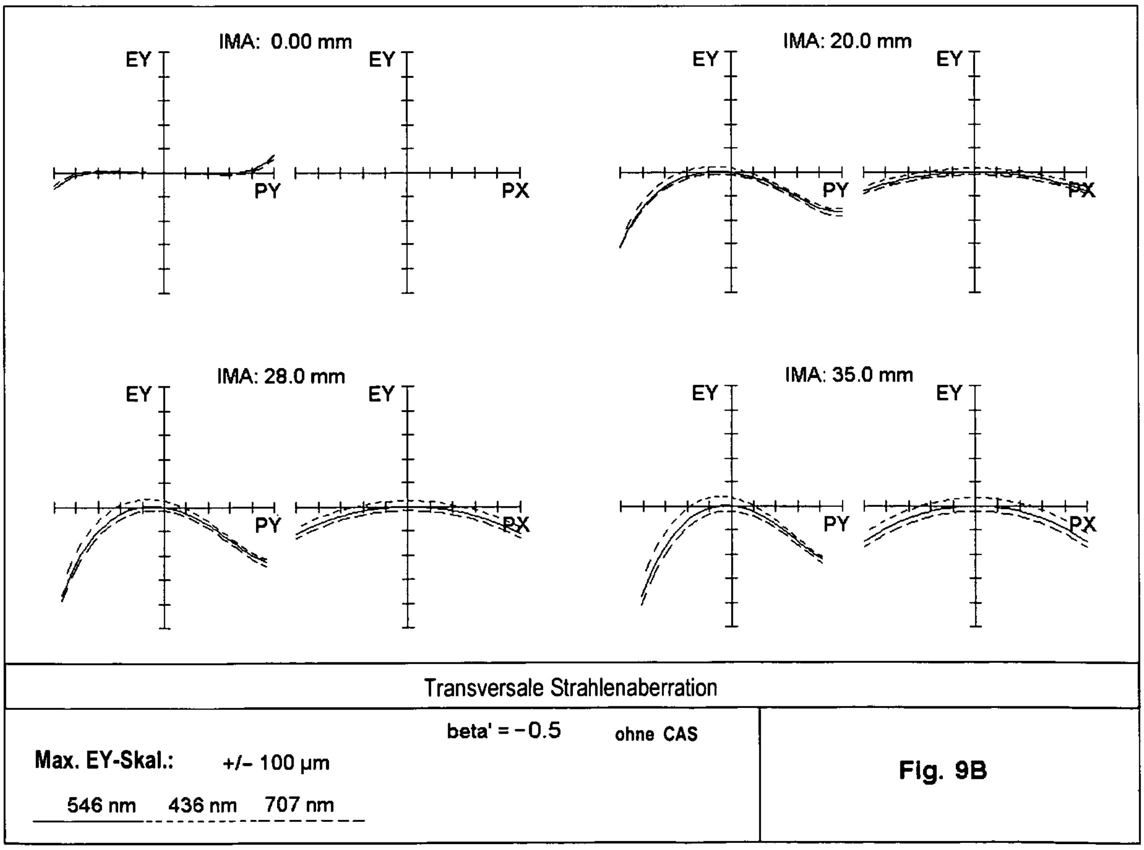


Transversale Strahlenaberration

beta' = -0.5 ohne CAS

Max. EY-Skal.: +/- 100 µm

546 nm 436 nm 707 nm

**Fig. 9B**

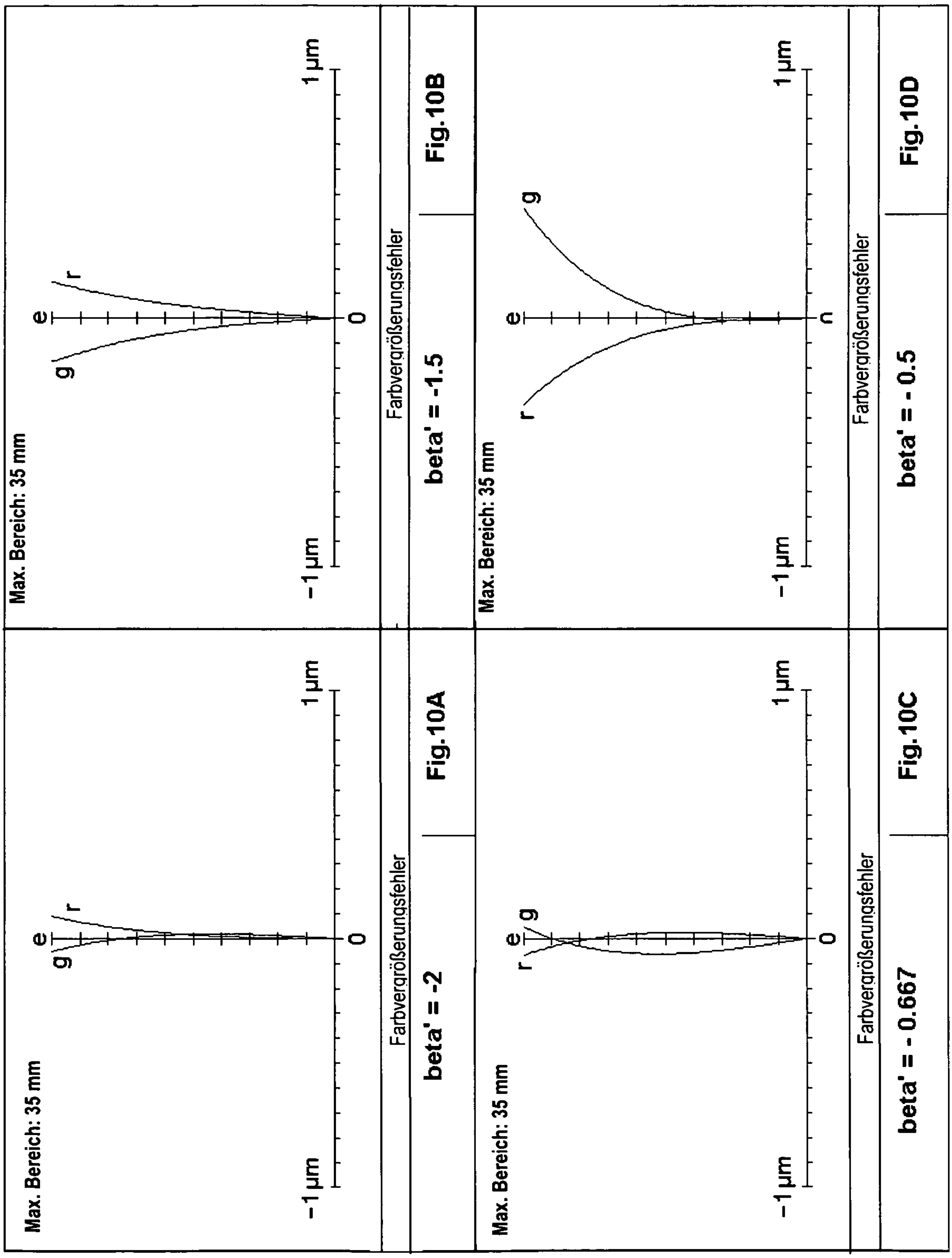


Fig.10A

Fig.10B

Fig.10C

Fig.10D

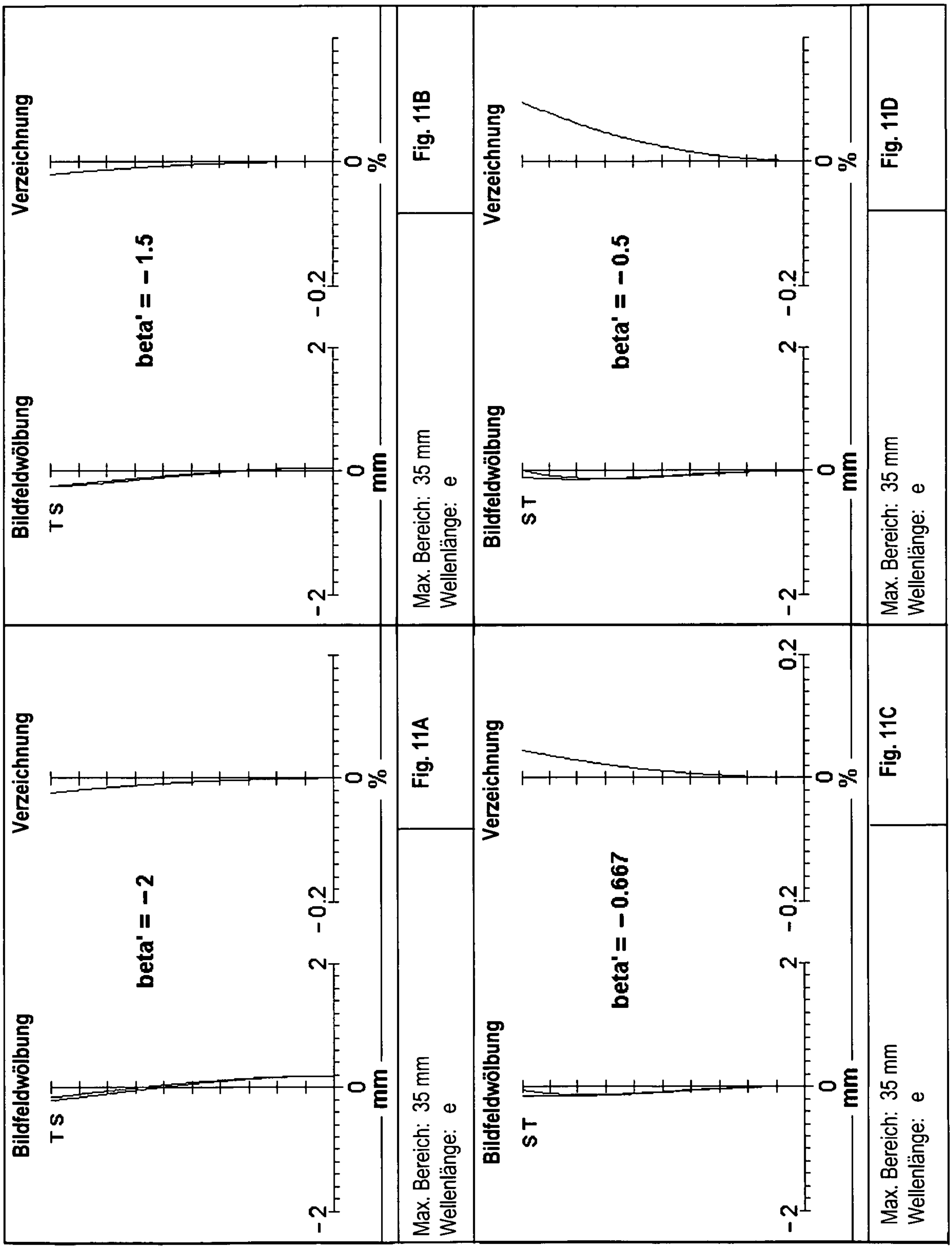
Bildfeldwölbung
Verzeichnung
T S
beta' = −2
-2
0
2
-0.2
0
mm
%
Max. Bereich: 35 mm
Wellenlänge: e
Fig. 11A
beta' = −1.5
Fig. 11B
S T
beta' = −0.667
0.2
Fig. 11C
beta' = −0.5
Fig. 11D

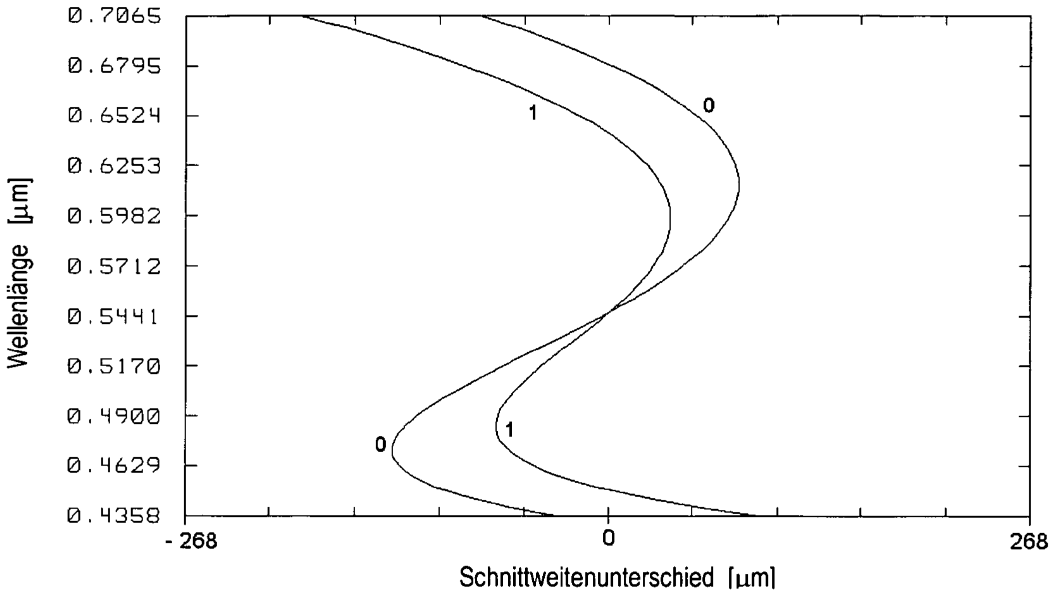


beta' = - 2
Beugungsgrenzen-Interwall: 536,0 µm
Rel. Eintrittspupillenhöhe: 0 & 1

Fig. 12A

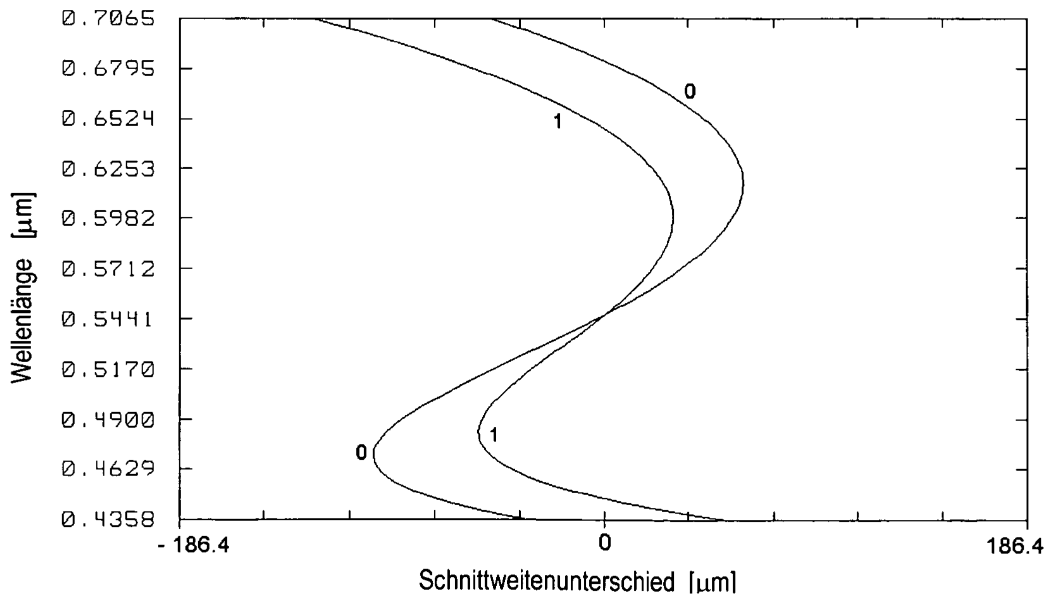


beta' = - 1,5
Beugungsgrenzen-Interwall: 372,8 µm
Rel. Eintrittspupillenhöhe: 0 & 1

Fig. 12B

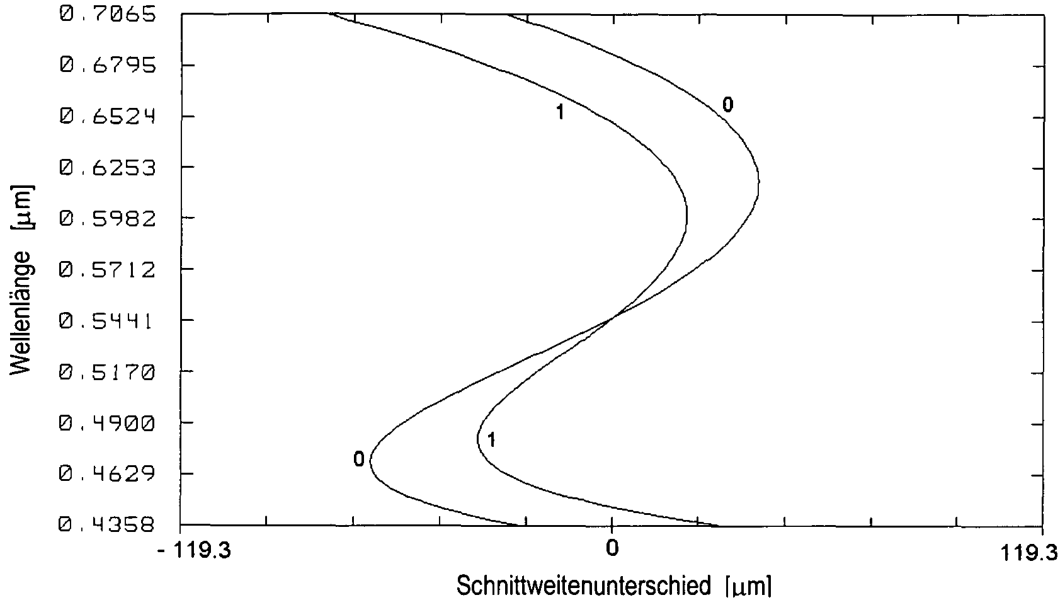


beta' = - 1
Beugungsgrenzen-Interwall: 238,6 µm
Rel. Eintrittspupillenhöhe: 0 & 1

**Fig. 12C**

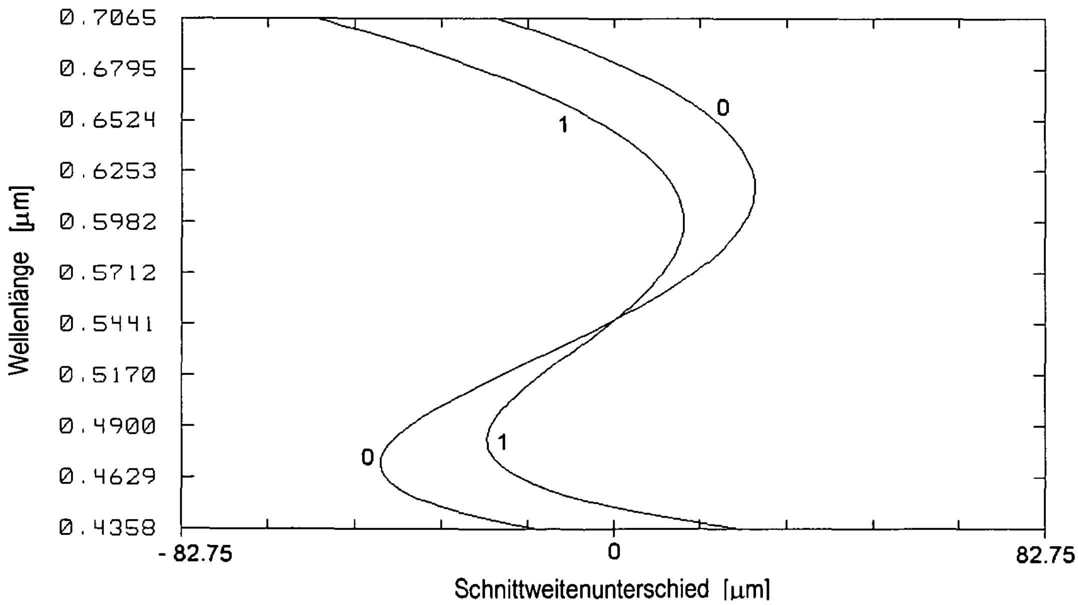


beta' = - 0,667
Beugungsgrenzen-Interwall: 165,5 µm
Rel. Eintrittspupillenhöhe: 0 & 1

**Fig. 12D**

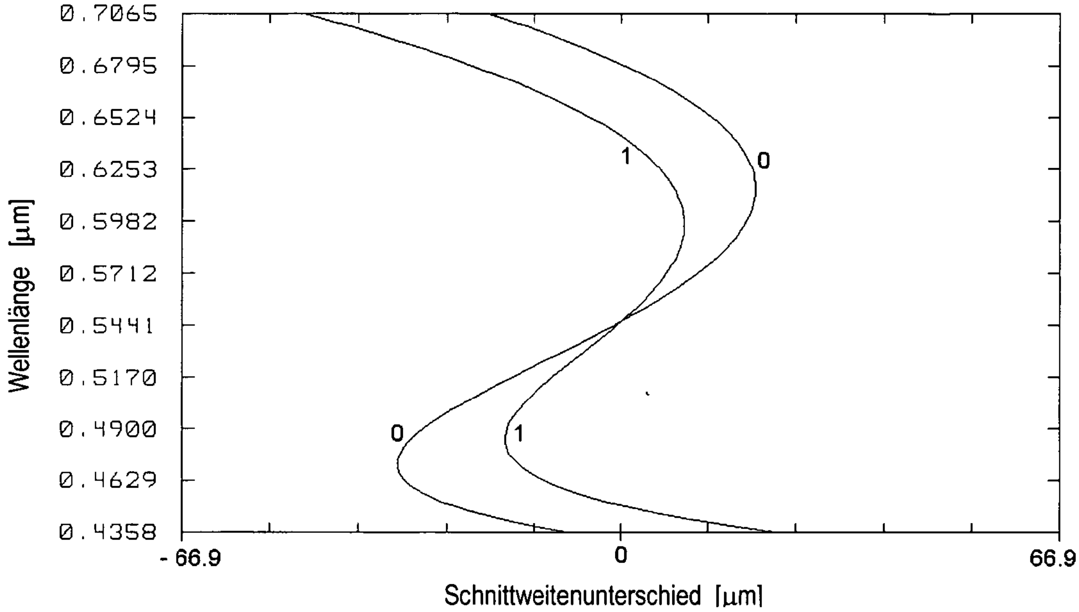


beta' = - 0,5
Beugungsgrenzen-Interwall: 133,8 µm
Rel. Eintrittspupillenhöhe: 0 & 1

**Fig. 12E**

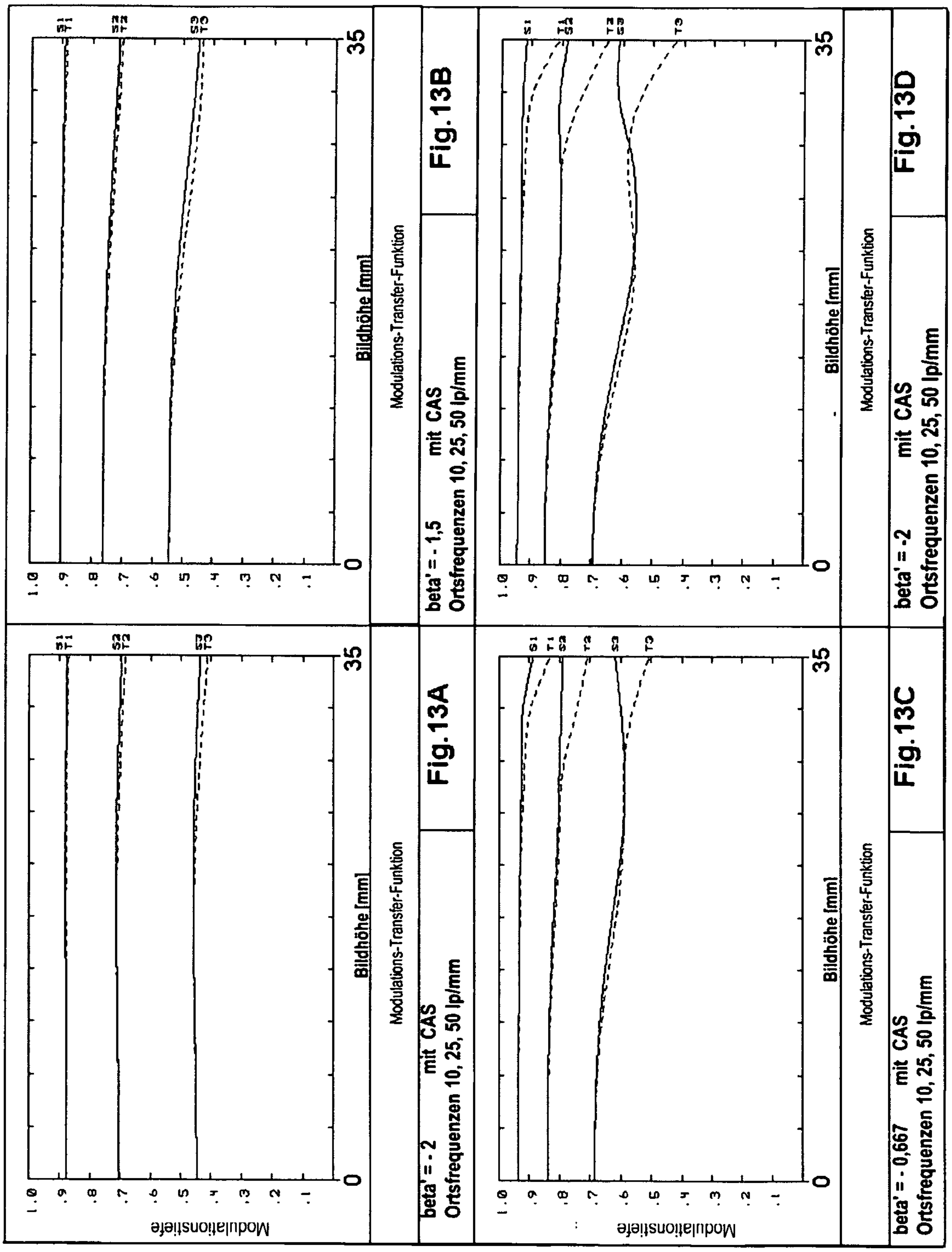


Fig.13A Fig.13B Fig.13C Fig.13D

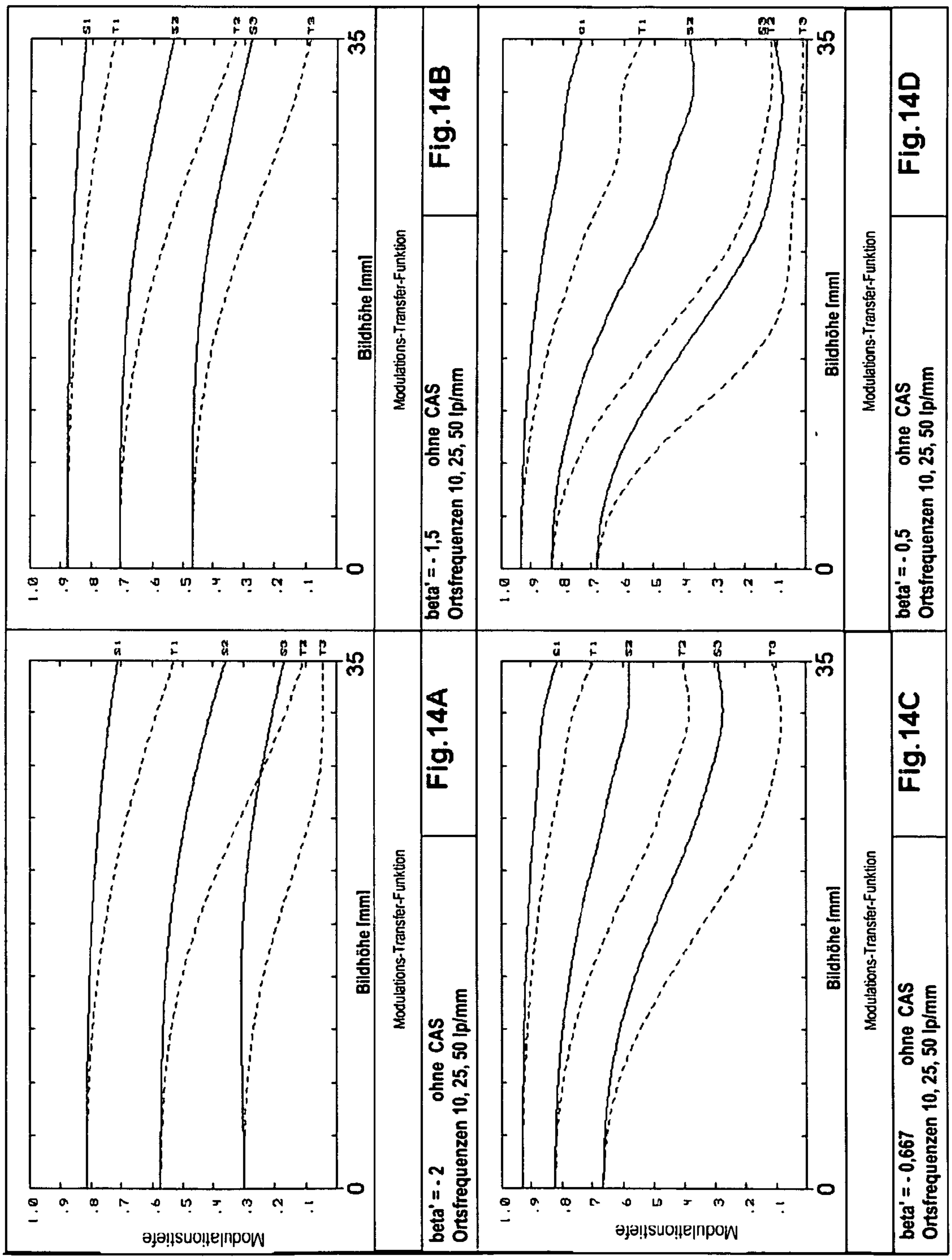


Fig.14A

Fig.14B

Fig.14C

Fig.14D

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4040405 A
- US 2006164540 A1
- DD 207268 B1
- US 3941457 A


### In der Beschreibung aufgeführte Nicht-Patentliteratur


- Optique geometrique generale In Handbuch der Physik. **MARECHAL, A.** Grundlagen der Optik. Springer Verlag, 1956, vol. XXIV
- **DIETZSCH, E.** *Zur Tiefenabbildung der Pupille Feingerätetechnik,* 1977, vol. 26 (1), 3-5
- **SLYUSAREV, G.G.** Aberration and Optical Design Theory. Adam Hilger Ltd, 1984
- **WYNNE, C.G.** *Proc. Phys. Soc.,* 1952, vol. 65B, 429-437